# EUROPÄISCHE PATENTSCHRIFT

(11) **EP 3 807 193 B1**
(45) Veröffentlichungstag und Bekanntmachung des Hinweises auf die Patenterteilung: **23.04.2025**
(21) Anmeldenummer: 19731908.0
(22) Anmeldetag: 12.06.2019
(51) Int. Cl.: B65G 1/137

(54) **ZWEISTUFIGE KOMMISSIONIERUNG MITTELS SORTER MIT HOCHDYNAMISCHEN SORTERSCHALEN**
TWO-STAGE PICKING BY MEANS OF SORTER HAVING HIGH-DYNAMIC SORTER TRAYS
PRÉPARATION DE COMMANDES EN DEUX ÉTAPES AU MOYEN DE TRIEURS DOTÉS DE PLATEAUX DE SÉLECTION HAUTEMENT DYNAMIQUES

(30) Priorität: 12.06.2018 DE 102018114026
(43) Veröffentlichungstag der Anmeldung: 21.04.2021
(73) Patentinhaber: SSI Schäfer Automation GmbH (DE), 97232 Giebelstadt (DE)
(72) Erfinder: ISSING, Elmar, 97232 Giebelstadt (DE); HERZMAIER, Christian, 97076 Würzburg (DE)
(74) Vertreter: Witte, Weller & Partner Patentanwälte mbB
(86) Internationale Anmeldenummer: PCT/EP2019/065296
(87) Internationale Veröffentlichungsnummer: WO 2019/238728

(56) Entgegenhaltungen:
- EP-A1- 2 876 060
- WO-A1-2016/139003
- AT-A1- 511 868
- DE-A1- 102011 018 983
- JP-A- 2014 141 313
- JP-A- 2015 042 587
- JP-A- 2017 071 458
- US-B2- 6 721 627

## Beschreibung

Die vorliegende Erfindung betrifft ein Lager- und Kommissioniersystem, das zum Batch-Kommissionieren eingerichtet ist und das einen hochdynamischen Sorter aufweist. Die Erfindung wird insbesondere zur Abwicklung einer Kommissionierung im Bereich des E-Commerce eingesetzt.

E-Commerce macht das Kommissionieren (Entnahme eines Artikels aus einem Lagerbehältnis und Abgabe des entnommenen Artikels an ein Zielbehältnis gemäß einem Kommissionierauftrag) immer schwieriger, weil die Artikelsortimente (Anzahl von unterschiedlichen Artikeltypen, die bevorratet werden) immer größer werden, während die von den Kunden akzeptierten Lieferzeiten (< 24h) immer kürzer werden.

Artikelspektren, die im E-Commerce typisch sind, können schnell mehrere hunderttausend verschiedener Artikeltypen umfassen. Artikelspektren mit dreihunderttausend bis eine Million verschiedenen Artikeltypen sind im E-Commerce durchaus gegeben.

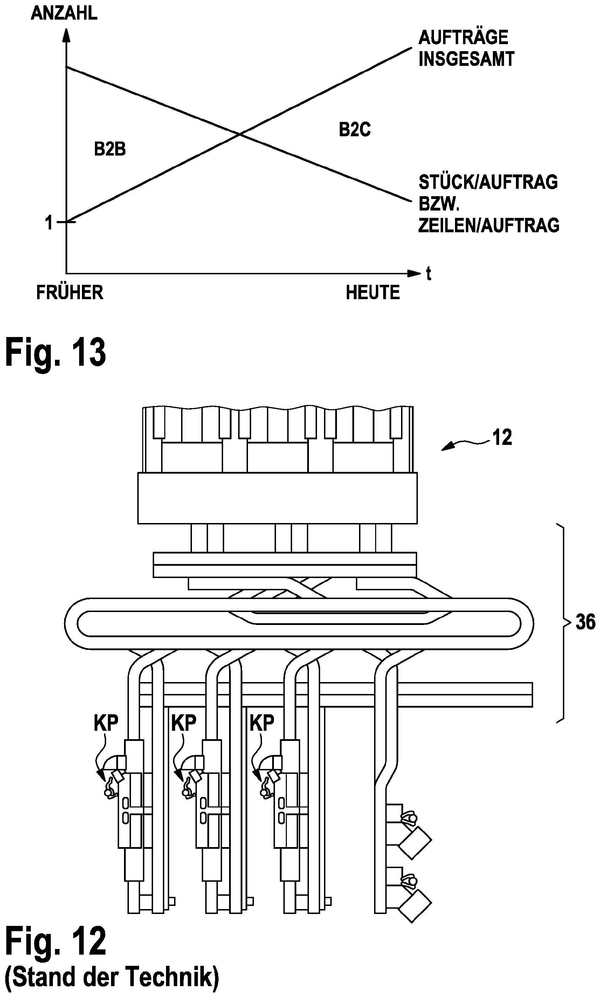

Die Kunden erwarten eine Zustellung ihrer Bestellungen innerhalb von 24 Stunden. Dies bedeutet, dass sehr viele verschiedene Artikeltypen innerhalb der Kommissionier- bzw. Distributionszentren vorgehalten werden müssen, was wiederum die Lagerflächen und Transportwege vergrößert. Die Artikel müssen sehr schnell kommissioniert werden. Da die Lagerbereiche dementsprechend riesig dimensioniert sind, können die Transportwege sehr lang werden, bis die Artikel vom Lager an einer Kommissionierstation ankommen, insbesondere wenn einstufig kommissioniert wird (vgl. Fig. 12).

Durch den E-Commerce hat sich eine allgemeine Auftragsstruktur geändert (vgl. Fig. 13). Während früher intralogistische Anlagen im Wesentlichen zur Belieferung von Filialen (B2B) eingesetzt wurden, wo z.B. mit einem Auftrag ein ganzer LKW beladen wurde, müssen die Anlagen heute für das online B2C-Geschäft (innerhalb von 24 Stunden) gerüstet sein. Die durchschnittliche Anzahl von Auftragszeilen pro Auftrag nähert sich heute immer weiter dem Faktor 1 an. Schon heute liegt die Größenordnung im E-Commerce bei kleiner als zwei Auftragszeilen pro Auftrag.

Um nicht jedes Lagerbehältnis individuell für jeden Auftrag aus dem Lager auszulagern (und später auch wieder einzulagern), werden heute "Batches" gebildet bzw. zweistufig kommissioniert.

Generell werden beim zweistufigen Kommissionieren mehrere Kundenaufträge (vorab) gesammelt und zusammengefasst, um gleichzeitig bearbeitet zu werden, was auch als paralleles Kommissionieren bezeichnet wird. Beim zweistufigen Kommissionieren werden die Prozesse der Artikelandienung und Artikelentnahme (erster Schritt) sowie der auftragsspezifischen Zusammenstellung der entnommenen Artikel (zweiter Schritt) in zwei separaten Schritten durchgeführt. Durch diese Maßnahme können alle in einer größeren Menge von (verschiedenen) Aufträgen auftretenden identischen Artikel(typen) in einem ersten Schritt ausgelagert werden.

Das entsprechende Lagerbehältnis muss also nur einmal ausgelagert werden, kann dann aber zu mehreren Entnahmeplätzen bewegt werden, sodass sich Wegzeiten erheblich reduzieren.

In der klassischen zweistufigen Kommissionierung werden alle Artikel in der ersten Stufe am gleichen Ort entnommen. Im zweiten Schritt erfolgt die Verteilung der entnommenen Artikel (durch Transport) auf die Kundenaufträge. Zur Durchführung dieser zweiten Stufe stehen verschiedene Fördersysteme, so genannte Sortier- und Verteilanlagen bzw. Sorter zur Verfügung.

Die Batch-Kommissionierung erfordert einen relativ hohen Systemaufwand zur Auftragsvorbereitung, zum Transport der Lagerbehältnisse und zur Verteilung der entnommenen Artikel auf die Kundenaufträge.

Sorter, und insbesondere Hochleistungssorter, sind allgemein in sich geschlossene, schnell umlaufende Förderstrecken, die an ein oder mehrere Aufgabestationen gekoppelt sind, um die Artikel auf den Sorter zu geben, und die an ein oder mehrere Abgabestationen bzw. Zielstellen gekoppelt sind, in welche die Artikel vom Sorter auftragsorientiert abgegeben werden.

Weit verbreitet sind umlaufende Kippschalensorter, umlaufende Querbandsorter und Linearsorter wie zum Beispiel Schuhsorter oder lineare Querbandsorter. Diese Sorter können Artikel pro Stunde sortieren bzw. auf die Zielstellen verteilen.

Die Sortierleistung ist abhängig von der Umlaufgeschwindigkeit und der Schalenteilung. Mit einer Geschwindigkeit von 2 Meter pro Sekunde können zum Beispiel zwölftausend Sortierungen pro Stunde erreicht werden. Jedoch ist die (Aufnahme-)Kapazität der vorbekannten Sorter begrenzt. Es können immer nur so viele Artikel auf den Sorter gegeben werden, wie "Plätze" (zum Beispiel Sorterschalen) vorhanden sind. Natürlich ist es möglich, die Anzahl der Plätze zu erhöhen, indem man die Gesamtlänge des Umlaufs vergrößert. Jedoch vergrößert sich dadurch ein Flächenbedarf des Sorters innerhalb der logistischen Gesamtlösung. Üblicherweise stehen keine großen Flächen zur Verfügung bzw. die Investitionskosten steigen.

Je höher die Umlaufgeschwindigkeit ist, desto schwieriger ist es aber, die Artikel einzuschleusen und auszuschleusen. Bei hohen Geschwindigkeiten können sich die Artikel von den Schalen trennen (z.B. herunterfallen). Insbesondere beim Ausschleusen wirkt sich die hohe Umlaufgeschwindigkeit negativ aus, weil die geometrische Größe der Zielstellen mit zunehmender Umlaufgeschwindigkeit immer größer werden muss, um die Zielstelle beim Ausschleusen auch sicher zu treffen. Eine Vergrößerung der Zielstellen resultiert jedoch in einer Verringerung der Anzahl der Zielstellen, die entlang des Sorters angeordnet werden können. Eine Verringerung der Anzahl der möglichen Zielstellen wirkt sich wiederum negativ auf den so genannten "Batch-Faktor" (Anzahl der zusammengefassten Aufträge) aus, weil dann immer weniger Aufträge gleichzeitig bearbeitet werden können. Die gleichzeitige Bearbeitung von zum Beispiel tausend Aufträgen ist nicht möglich, wenn nur 5 - 10 Zielstellen zur Verfügung stehen.

Außerdem können hohe Geschwindigkeiten zu Atrikelbeschädigungen führen. Die Artikel können an die falsche Zielstelle abgegeben werden, so dass ein unbeabsichtigter Artikelmix entsteht.

Bei einem weiteren Ansatz, bei dem zweistufig ohne den Einsatz von Sortern kommissioniert wird, wird das (artikelrein bestückte) Lagerbehältnis zwar auch nur ein einziges Mal ausgelagert. Dieses Lagerbehältnis wird dann aber, gemäß einer Mehrstopp-Strategie, zu einer Vielzahl von Kommissionierplätzen ( vgl. "KP" in Fig. 12) transportiert, wobei jeder der Kommissionierplätze üblicherweise 6 - 7 Aufträge parallel bearbeiten (d.h. Artikel auftragsorientiert sammeln) kann. Dieser Ansatz resultiert in einem relativ komplexen Transportnetzwerk, das zwischen dem Lager und den Kommissionierplätzen anzuordnen ist. Dieses Transportnetzwerk wird üblicherweise durch Stetigförderer abgebildet, wie es in der Figur 12 exemplarisch gezeigt ist.

In diesem Zusammenhang ist zu beachten, dass neben dem Transportsystem für die Lagerbehältnisse auch ein Transportsystem für die Auftragsbehältnisse, in welche die entnommenen Artikel abgegeben werden, vorgesehen werden muss. Auch hier gibt es verschiedene Ansätze. Die Auftragsbehältnisse können über die gleiche Fördertechnik wie die Lagerbehältnisse transportiert werden. Die Auftragsbehältnisse werden üblicherweise aber über ein eigenes Transportsystem bewegt werden. Dadurch erhöht sich wiederum die Komplexität des Gesamttransportsystems.

Die "Synchronisierung" der Lagerbehältnisse und der Auftragsbehältnisse ist in diesem Fall schwierig. Die Lagerbehältnisse und die Auftragsbehältnisse müssen gemeinsam zur gleichen Zeit am gleichen Ort vorhanden sein.

Ferner ist es in diesem Fall möglich, den Auftragsbehälter an mehreren Kommissionierplätzen stoppen zu lassen, um die Artikel aufzunehmen, die zu dem entsprechenden Auftrag gehören. Man spricht in diesem Zusammenhang von einer Mehrstoppstrategie für die Auftragsbehälter. Eine entsprechende Mehrstoppstrategie kann natürlich auch auf die Lagerbehältnisse angewendet werden. Das Ergebnis ist, dass der Verkehr von Lagerbehältnissen und Auftragsbehältnissen, und insbesondere deren Synchronisierung, sehr komplex und schwierig zu steuern ist.

In diesem Spannungsfeld bewegt sich die vorliegende Erfindung.

Das Dokument WO 2008/061744 A1 offenbart einen Schalensorter, der manuell befüllt wird. Die Befüllung erfolgt mit einer Befüllstation, die eine Vielzahl von Befüllschächten aufweist, die oberhalb der umlaufenden Schalen angeordnet sind. Die Befüllschächte werden computergesteuert zum richtigen Zeitpunkt geöffnet, sodass darin gespeicherte Artikel in eine vorbestimmte Schale des sehr schnell umlaufenden Sorters fallen. Die befüllten Schalen werden automatisiert in die Zielstellen entleert, die an den Sorter koppeln. Die Artikel werden zur Befüllung der Schächte aus Lagerbehältern entnommen, die artikel- bzw. Batch-orientiert zur Befüllstation transportiert werden.

Das Dokument WO 2011/107385 A1 offenbart einen universellen Hochleistungskommissionierplatz, der in der Fig. 12 eingesetzt werden könnte. Dieser universelle Kommissionierarbeitsplatz ist eingerichtet, eine Vielzahl von Lagerbehältnissen und eine Vielzahl von Auftragsbehältnissen parallel zu bearbeiten, die in einer abgegrenzten Kommissionierzone bereitgestellt werden.

Das Dokument DE 10 2007 005 561 A1 offenbart ein Kommissioniersystem mit einer Regaltransporteinheit und ein Verfahren zum Betreiben des Systems.

Das Dokument DE 10 2007 011 856 A1 offenbart ein doppelseitig zugängliches Kommissionierregal und ein Kommissionierverfahren.

Das Dokument DE 10 2016 002 760 A1 offenbart ein Hochregallager mit angeschlossenen Kommissionierplätzen, das als Durchlaufregal ausgebildet ist.

Die JP 2014 141313 A offenbart ein Lager- und Kommissioniersystem nach dem Oberbegriff des Anspruchs 1.

Die JP 2017 071458 A offenbart ein Sortiersystem und ein Sortierverfahren.

Die JP 2015 042587 A offenbart ein Artikellager.

Daher ist es eine Aufgabe ein Lager- und Kommissioniersystem zu schaffen, dass den Anforderungen des E-Commerce gerecht wird, einen geringen Flächenbedarf hat und eine hohe Kommissionierleistung ermöglicht.

Diese Aufgabe wird gelöst durch ein Lager- und Kommissioniersystem gemäß Anspruch 1.

Das oben beschriebene System ist auf die Bedürfnisse des E-Commerce angepasst. Das System ist fähig, viele Kundenaufträge parallel abzuarbeiten, auch wenn jeder der Kundenaufträge eine sehr geringe Anzahl von Auftragszeilen und/oder Stück pro Auftrag enthält.

Der Sorter kann mehr Schalen gleichzeitig handhaben, als es durch die Aufnahmekapazität der Hauptstrecke vorgegeben ist.

Obwohl die Hauptstrecke kontinuierlich betrieben wird, das heißt, obwohl die Schalen auf der Hauptstrecke stoppfrei und vorzugsweise mit einer maximal möglichen Geschwindigkeit bewegt werden, kann zumindest der Beladevorgang in einem Zustand durchgeführt werden, wo die Schale entweder angehalten ist oder sich sehr langsam bewegt. Dies ist möglich, weil die Schale in einer maschenförmigen Nebenstrecke beladen wird, wobei vorzugsweise ein Stück pro Schale geladen wird.

Die Schalen können in die Hauptstrecke eingeschleust und aus der Hauptstrecke ausgeschleust werden. Dies ist möglich, weil die Schalen nicht dauerhaft fest mit dem Fördermittel der Hauptstrecke verbunden sind, dass vorzugsweise permanent endlos umläuft.

Das System ist vollständig automatisierbar. Sowohl das Beladen der Schalen als auch das Entladen der Schalen kann vollautomatisiert erfolgen. Vorzugsweise werden Roboter zum Beladen und zum Entladen eingesetzt.

Alternativ können die Schalen beim Entladen mit einem automatischen Entlademechanismus (zum Beispiel einer Kulisse) versehen sein, der durch die Bewegung der Schale selbst ausgelöst wird.

Ein weiterer Vorteil des Systems ist darin zu sehen, dass wenig Platz (Flächenbedarf) benötigt wird. Der Sorter kann in einem Bereich installiert werden, der der klassischen (Fördertechnik-)Vorzone entspricht.

Der Streckenverlauf des Sorters ist einfach ausgestaltet. Die Schalen können fließend und ohne Stopp auf kurzem Weg von den Vereinzelungsstationen zu den Zielstellen transportiert werden. Wegoptimierungen sind möglich.

Die Sorterschalen können unterschiedlich dimensioniert sein und dennoch gleichzeitig über die Hauptstrecke transportiert werden. Ein Mix unterschiedlicher Schalen ist möglich. Dies ermöglicht es, Schalen in Abhängigkeit von den Dimensionen der Artikel zu wählen. Es wird weniger Platz auf den Schalen verschenkt. Die Artikeldichte auf der Hauptstrecke kann erhöht werden. Eine Schalendichte auf den Strecken kann erhöht werden.

Die Schalen sind vorzugsweise so dimensioniert, dass vier oder mehr Schalen pro Meter auf dem Sorter, insbesondere der Hauptstrecke, transportierbar sind.

Vorzugsweise weist das System ferner eine Fördertechnik für die Auftragsbehälter auf, die die Zielstellen mit Auftragsbehältern versorgt.

Artikel, die in den Zielstellen auftragsorientiert gesammelt wurden, werden in Auftragsbehälter entleet. Die Auftragsbehälter werden dabei vorzugsweise mit einer Ein-Stopp-Strategie bewegt.

Insbesondere weist jede der Zielstellen eine Rutsche und/oder ein Sammelbehälter auf.

Die Rutsche ermöglicht es, die Schalen durch Kippen zu entladen. Die Artikel, die von der Schale gekippt wurden, können dann über die Rutsche durch Schwerkraft in ein Auffangbehältnis, dass den Sammelbehälter darstellt, transportiert werden. Die Entladung erfolgt also automatisiert. Der Sammelbehälter hat die Aufgabe, alle Artikel, die zu einem Auftrag gehören, zu sammeln. Sobald alle Artikel des Auftrags vorliegen, kann der Sammelbehälter in den Auftragsbehälter entleert werden. Die Entleerung kann ebenfalls automatisiert erfolgen, in dem zum Beispiel der Boden weggeklappt wird.

Weiter ist es bevorzugt, wenn die Schalen und/oder die Zielstellen eingerichtet sind, die Artikel, die auf die jeweiligen Schalen geladen sind, auftragsorientiert am Ort der entsprechenden Zielstelle automatisiert zu entladen, insbesondere abzukippen.

Auf diese Weise lässt sich das System weiter automatisieren. Die Entladung der Schalen erfolgt automatisiert. Die Entladung der Schalen erfolgt insbesondere passiv, zum Beispiel in dem ein Kippmechanismus der Schale durch eine Kulisse betätigt wird, die während einer Vorbeifahrt der Schale an der Zielstelle betätigt wird. Alternativ können die Schalen vorab schon geneigt sein und mit einer bewegbaren Seitenwand versehen sein, um Artikel auf der Schale freizugeben.

Weiter ist es von Vorteil, wenn der Sorter ferner Querverbindungsstrecken innerhalb der in sich geschlossenen Hauptstrecke aufweist, sodass sich die Schalen gegenseitig überholen können und dass sich Transportwege von den Vereinzelungsstationen zu den Zielstellen verkürzen.

Die Querverbindungstrecken ermöglichen eine Wegoptimierung.

Die Querverbindungsstrecken unterteilen die in sich geschlossene Hauptförderstrecke in eine Vielzahl von kleineren, in sich geschlossenen Hauptförderstrecken, die parallel zueinander angeordnet sind. Durch diese Maßnahme kann das Transportnetz flexibler auf höhere Verkehrsanforderungen reagieren. Die Möglichkeiten, von der Vereinzelungsstation eine bestimmte Zielstelle zu erreichen, erhöhen sich.

Die Steuereinrichtung ist eingerichtet, in der ersten Kommissionierstufe eine Auslagerung der Lagerbehälter aus dem Lager artikelorientiert, insbesondere artikeltyporientiert, gemäß einer Batch-Kommissionierung zu veranlassen.

Die Steuereinrichtung sammelt vorab eine gewisse Menge von Kundenaufträgen, um die Anzahl der Lagerbewegungen, das heißt die Ein/Auslagerung der Lagerbehälter, soweit wie möglich zu reduzieren. Im Idealfall wird ein einziger Lagerbehälter, der den gewünschten Artikeltyp enthält, für die bestimmte Menge der Kundenaufträge ein einziges Mal aus- und eingelagert. An der Vereinzelungsstation wird die benötigte Anzahl der Artikel dieses Artikeltyps insgesamt sukzessive, das heißt auftragszeilenorientiert oder einzeln, entnommen und jeweils auf eine Schale gegeben. Der Lagerbehälter bewegt sich also mit einer so genannten "Ein-Stopp-Strategie" durch das System, wobei sich die Auftragsbehälter vorzugsweise ebenfalls mit einer Ein-Stopp-Strategie durch das System bewegen. Das sich sowohl die Lagerbehälter als auch die Auftragsbehälter jeweils mit einer Ein-Stopp-Strategie durch das System bewegen können, liegt insbesondere an der vorteilhaften Ausgestaltung des Sorters, der zwar umlaufend betrieben wird, aber in der Lage ist, mehr Schalen gleichzeitig zu handhaben, als es durch die maximale Aufnahmekapazität der Hauptstrecke bestimmt ist.

Insbesondere weist das System ferner mindestens eine der folgenden Komponenten auf:
einen Puffer für leere Schalen; einen Kommissionierpuffer für vorab beladene Schalen;
eine Anbindung an manuelle oder automatisierte Kommissionierbereiche; Entnahme/Abgabebereiche; und/oder eine Anbindung an eine Hängefördertaschen-Be/Entladestation.

Das System ist universell kompatibel. Das System kann in bestehende Lager- und Kommissioniersysteme integriert werden, die gemäß allen gängigen Kommissionierstrategien betrieben werden. Der Kompatibilität sind keine Grenzen gesetzt.

Das System ermöglicht es dem Betreiber des Lager- und Kommissioniersystems auf die verschärften Anforderungen des E-Commerce zu reagieren.

Bei einer vorteilhaften Ausgestaltung ist der Sorter durch eine Fördertechnik, und insbesondere durch einen Gliederkettenförderer, implementiert.

Fördertechniken, insbesondere Stetigförderer wie Gliederkettenförderer, sind extrem langlebig, haltbar und benötigen wenig Wartung.

Die (losen) Schalen können aufgestaut werden, während der Antrieb weiter permanent läuft. Ein Staudruck auf die Schalen ist minimal.

Ein weiterer Vorteil eines Gliederkettenförderers ist darin zu sehen, dass die Kette permanent, das heißt ohne Unterbrechung, angetrieben wird. Für die Bewegung der Kette werden nur wenige Antriebe (Motoren), insbesondere nur ein einziger, entlang der Hauptstrecke benötigt. Die Steuerung ist simpel. Die Strecken können geometrisch sehr lang sein.

Bei einer weiteren besonderen Ausgestaltung weist das Lager mindestens ein Lagermodul auf, dass durch zwei Regale mit einer Regalgasse dazwischen gebildet wird, wobei jedem der Regalmodule eine separate Vereinzelungsstation zugeordnet ist.

Die Regalmodule stellen voneinander unabhängige Einheiten dar, die jeweils von einer eigenen Vereinzelungsstation bedient werden. Durch diese Art der Anordnung können sehr hohe Pick-Leistungen erzielt werden. Unter einer Pick-Leistung versteht man die Anzahl von Umladevorgängen pro Zeiteinheit. Bei den Umladevorgängen werden die Artikel aus den Lagerbehältern auf eine Vielzahl von Schalen verteilt. In der Regel erfolgt der Umladevorgang in einer 1:1-Zuordnung. Dies bedeutet, dass pro Schale ein Stück umgeladen wird. Selbstverständlich können auch mehrere Stücke pro Umladevorgang umgesetzt werden. Dies stellt aber üblicherweise die Ausnahme dar.

Bei einer weiteren vorteilhaften Ausführungsform werden die Lagerbehälter über mindestens zwei separate Fördertechniken der jeweils zugeordneten Vereinzelungsstation, insbesondere unidirektional, zugeführt. Die Vereinzelungsstation weist einen Roboter zum Umsetzen der Artikel auf, wobei der Roboter vorzugsweise so zwischen den separaten Fördertechniken angeordnet ist, dass der Roboter während eines Bewegungszyklus von jeder der separaten Fördertechniken jeweils einen (oder mehrere) Artikel aufnehmen und zwischen den entsprechenden Artikelaufnahmen einen bereits aufgenommenen Artikel an eine der Schalen abgeben kann.

Es ist möglich, einen oder mehrere, bereits bearbeitete Lagerbehälter auf Zwischenpufferplätzen für eine spätere erneute Entnahme von Artikeln zwischenzulagern

Der Roboter bewegt sich dabei vorzugsweise auf einer halbkreisförmigen Bewegungsbahn, deren Wendepunkte die Entnahmestellen auf den beiden separaten Fördertechniken repräsentieren. Zwischen den Wendepunkten erfolgt die Abgabe des aufgenommenen Artikels an die Schale. Die Bewegung des Roboterarms muss bei der Abgabe nicht zwingend angehalten werden. Der Roboter kann den Artikel abgeben (zum Beispiel fallenlassen), während der Roboterarm sich von der einen Aufnahmeposition zur gegenüberliegenden anderen Aufnahmeposition bewegt. Vorzugsweise wird die Bewegung des Roboterarms aber verlangsamt.

Durch diese Vorgehensweise lassen sich sehr hohe Pick-Leistungen erzielen.

Im Gegensatz zur klassischen Versorgung des Roboters, wo der Roboter bei einer einsträngigen Versorgung zwar ebenfalls mehrere Entnahmepositionen haben kann, diese Entnahmeposition aber wiederholt den gleichen Lagerbehälter anbieten, weil der Roboter klassisch nur über einen Fördertechnikstrang versorgt wird, werden durch die zwei separaten Fördertechniken zwei Fördertechnikstränge vorgesehen. Dies bedeutet, dass dem Roboter immer unterschiedliche Lagerbehälter präsentiert werden. Dies bedeutet mit noch anderen Worten, dass dem Roboter mehr unterschiedliche Lagerbehälter pro Zeiteinheit präsentiert werden können.

Außerdem haben sogenannte Vision-Systeme mehr Zeit, eine relative Lage der Artikel innerhalb der Lagerbehälter zu erfassen und zu bestimmen. Somit steht auch mehr Zeit zur Verfügung, eine Bewegungsbahn und/oder einen Greifvorgang des Roboters zu berechnen.

Vorzugsweise werden zwei weitere separate Fördertechniken vorgesehen, die zum Rücktransportieren der Lagerbehälter in das Lager nach der Artikelentnahme durch den Roboter eingerichtet sind.

In diesem Fall sind im Bereich des Roboters insgesamt vier separate Fördertechniken vorgesehen. Zwei dieser Fördertechniken werden zum Präsentieren der Lagerbehälter benutzt. Die anderen zwei Fördertechniken werden zum Rücktransportieren der angebotenen Lagerbehälter benutzt, wobei es jedoch zu keinen Stauungen kommt, weil die vier Fördertechniken vorzugsweise unidirektional und unabhängig voneinander (insbesondere schleifenförmig) betrieben werden.

Diese Anordnung ist insbesondere dann von Vorteil, wenn die zwei weiteren separaten Fördertechniken in einer anderen Ebene als die Zuführ-Fördertechniken vorgesehen sind. Die rückführenden Fördertechniken können beispielsweise unterhalb der zwei zuführenden Fördertechniken angeordnet sein. Die zuführenden Fördertechniken sind dann jeweils über eine Hubeinrichtung mit den ihnen zugeordneten abführenden Fördertechniken verbunden.

Eine Korrektur (z.B. eines Fehlgriffs) kann unmittelbar durchgeführt werden. Ein zurückgeführter Behälter kann von "hinten" (über das Lager) erneut angedient werden.

Der Roboter wird dann über eine Fördertechnikschleife versorgt, die in einer vertikal orientierten Ebene angeordnet ist. Dies hat zur Folge, dass in einer (horizontalen) Aktionsebene des Roboters kein Rücktransport der Lagerbehälter stattfindet. Alle Lagerbehälter, die sich in dieser Aktionsebene befinden, sind potentielle Kandidaten für eine Artikelentnahme.

Vorzugsweise ist der Sorter, der stirnseitig vor dem Lager angeordnet ist, nicht breiter als das Lager. Insbesondere ist der Sorter vorzugsweise maximal 5 bis 10 Meter tief (in Längsrichtung X). Das gleiche gilt für eine Kombination aus Vereinzelungsstation und versorgender Fördertechnik. Dies bedeute mit anderen Worten, dass sich der Flächenbedarf erheblich reduziert. Bei gleicher Leistung werden nur noch 10-20% der klassischen (Stetigförderer-) Vorzone benötigt.

Vorzugsweise können die Lagerbehälter nicht das Regalmodul wechseln, d.h. es kommt zu keiner Durchmischung bzw. Verteilung über die Module.

Die Fläche, die der Sorter benötigt, um eine vorgegebene Anzahl von Kundenaufträgen pro Zeiteinheit zu kommissionieren, ist bedeutend kleiner als bei der klassischen einstufigen Behälterkommissionierung (vgl. Fig. 12). Die klassische einstufige Behälterkommissionierung benötigt viel längere Förderstrecken (und somit viel mehr Fläche), um die Lagerbehälter und Auftragsbehälter am Kommissionierzeitpunkt zu "synchronisieren", das heißt zur gleichen Zeit am gleichen Ort zusammenzuführen. Klassisch müssen zu diesem Zweck sowohl die Lagerbehälter als auch die Auftragsbehälter eine Mehrstopp-Strategie durchführen.

Ausführungsbeispiele der Erfindung sind in der Zeichnung dargestellt und werden in der nachfolgenden Beschreibung näher erläutert. Es zeigen:
- Fig. 1: ein Blockdiagramm eines Lager- und Kommissioniersystems;
- Fig. 2: veranschaulicht schematisch einen exemplarischen Verlauf einer Hauptstrecke eines Sorters sowie eine Möglichkeit, Vereinzelungsstationen an die Hauptstrecke anzubinden;
- Fig. 3: veranschaulicht die Hauptstrecke der Fig. 2 und (isoliert) eine Anbindung von Zielstellen an die Hauptstrecke;
- Fig. 4: veranschaulicht schematisch eine maschenförmige Nebenstrecke;
- Fig. 5: veranschaulicht schematisch eine Schleife;
- Fig. 6: zeigt eine Draufsicht auf ein exemplarisches System;
- Fig. 7: zeigt eine erste Anbindungsmöglichkeit für Zielstellen;
- Fig. 8: zeigt eine zweite Anbindungsmöglichkeit für Zielstellen;
- Fig. 9: zeigt eine dritte Anbindungsmöglichkeit für Zielstellen;
- Fig. 10: eine Draufsicht auf eine Anbindungsmöglichkeit für Vereinzelungsstationen;
- Fig. 11: zeigt eine Seitenansicht der Fig. 10 entlang einer Linie XI -XI der Fig. 10;
- Fig. 12: eine Kommissionieranlage gemäß dem Stand der Technik; und
- Fig. 13: einen Graphen zur Entwicklung einer durchschnittlichen Auftragsstruktur über die Zeit.

Die vorliegende Erfindung kommt im Bereich der Intralogistik, und insbesondere zur Abwicklung von E-Commerce, zum Einsatz. Die in der Intralogistik üblichen Bezeichnungen für die Längsrichtung X, die Querrichtung Z und die Höhenrichtung Y werden auch hier verwendet. In den nachfolgenden Figuren werden diese Richtungen X, Y und Z zur Bezeichnung eines (z.B. kartesischen) Koordinatensystems verwendet.

In der nachfolgenden Beschreibung wird zwischen dem Begriff "Verbindung" einerseits und dem Begriff "Kopplung" bzw. "Anbindung" anderseits klar unterschieden. Wenn zwei Punkte miteinander verbunden sind, stehen die Punkte über die Verbindung in direktem Kontakt zueinander. Wenn die Punkte aneinander gekoppelt sind, können sie direkt oder über Zwischenpunkte, also indirekt, miteinander verbunden sein. Wenn ein Punkt an einen anderen Punkt angebunden ist, so ist damit primär eine Kopplung gemeint. Es kann sich (sekundär) aber auch um eine direkte Verbindung handeln. Dies ist vom konkreten Fall abhängig.

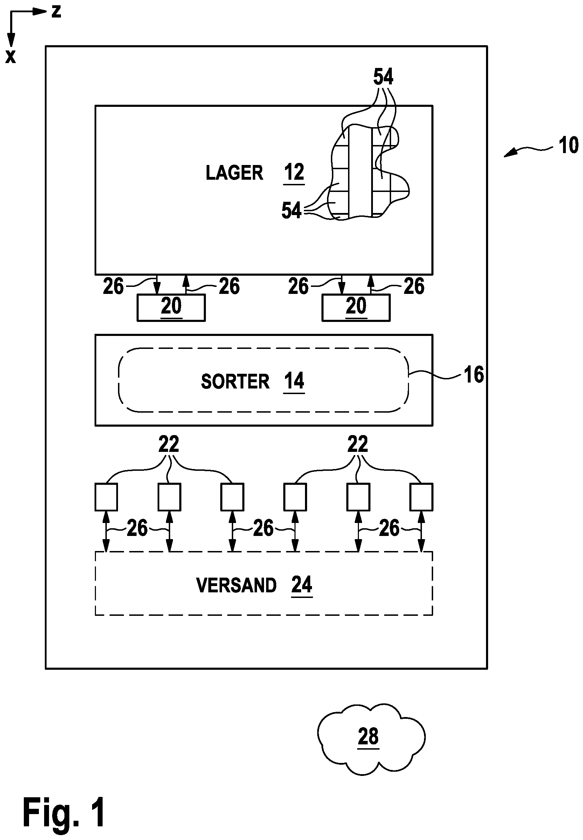

Fig. 1 zeigt ein Blockdiagramm eines Lager- und Kommissioniersystems 10, das nachfolgend auch kurz nur als System 10 bezeichnet werden wird. Das System 10 kann z.B. ein Distributionszentrum eines Online-Händlers sein. Das System 10 ist ein Material- bzw. Artikelhandhabungssystem.

Wenn nachfolgend von "Artikeln" gesprochen wird, so sind damit allgemein alle Arten von Gütern gemeint, die online bestellt werden können. Ein Artikel kann ein einzelnes Stückgut aber auch eine Verpackungseinheit mehrerer, miteinander zu einer Einheit verbundener Stückgüter sein. Ein Artikel kann ein Gebinde (z.B. ein Karton) sein, das eine Vielzahl von Stückgütern, insbesondere des gleichen Artikeltyps, enthält. Ein Artikel kann eine SKU (Stock Keeping Unit) sein. Dies bedeutet zusammenfassend, dass ein Artikel nicht einschränkend zu verstehen ist.

Die hier verwendeten Artikel unterscheiden sich aber in ihrem jeweiligen Artikeltyp. Eine Getränkedose ist z.B. ein erster Artikeltyp, wohingegen ein Sechserpack der gleichen Getränkedose ein anderer, zweiter Artikeltyp ist.

Das System 10 weist ein Lager 12 und einen Sorter 14 auf. Der Sorter 14 stellt eine fördertechnische Einrichtung dar, die artikelorientiert beladen und auftragsorientiert entladen wird. Der Sorter 14 weist mindesten ein endlos umlaufendes Transportelement auf, wie es unten noch näher erläutert werden wird. Dieses Transportelement wird insbesondere kontinuierlich und permanent angetrieben.

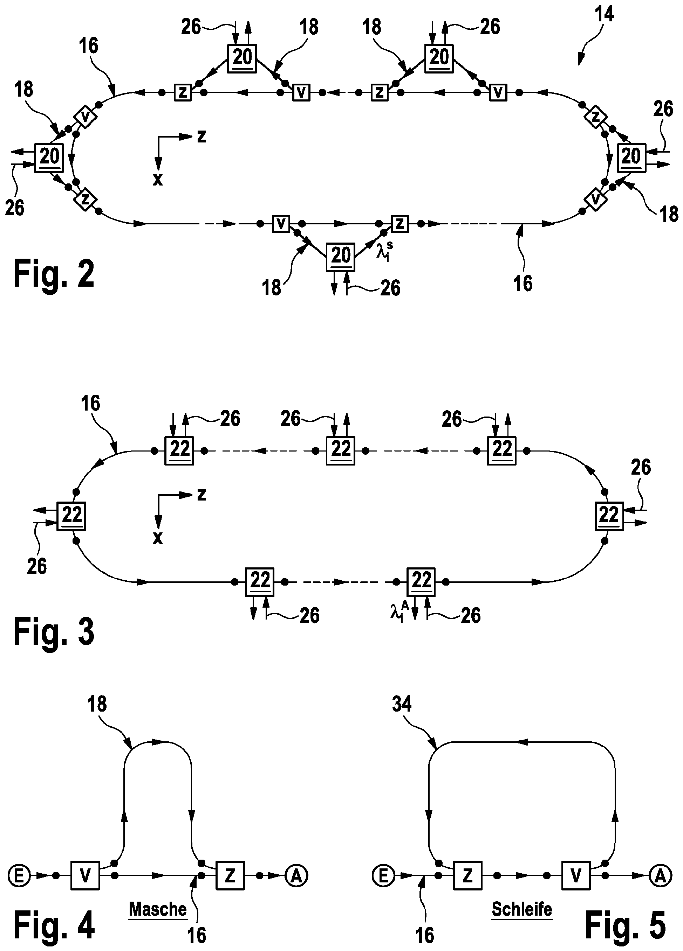

Der Sorter 14 weist eine in sich geschlossene, schleifenförmige Hauptstrecke 16, die in Fig. 1 mit einer Strichlinie angedeutet ist, und eine oder mehrere Nebenstrecken 18 (vgl. Fig. 2 und 4) auf, die sich an die Hauptstrecke 16 anschließen. Die Hauptstrecke 16 stellt einen Haupttransportweg dar, der die Vereinzelungsstationen 20 mit den Zielstellen 22 verbindet. Um von den Vereinzelungsstationen 20 zu den Zielstellen 22 zu gelangen, muss man sich zwingend über die Hauptstrecke 16 bewegen.

Ferner weist das System 10 eine oder mehrere Vereinzelungsstationen 20 sowie eine Vielzahl von Zielstellen 22 auf. Optional kann das System 10 auch einen Versand 24 aufweisen.

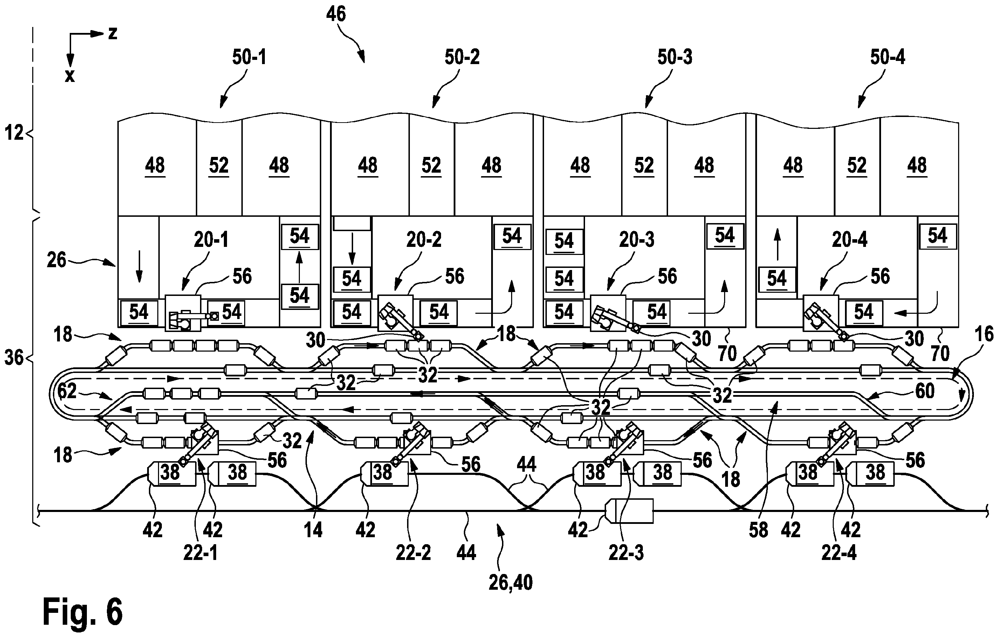

Die Vereinzelungsstationen 20 sind, im Sinne eines Material- bzw. Artikelflusses, über eine Fördertechnik 26 mit dem Lager 12 verbunden. Bei der Fördertechnik 26 kann es sich zum Beispiel um ein Transportnetz handeln, das aus Stetigförderern (Rollenförderer 70, Kettenförderer, Hängeförderer, Bandförderer, etc.) und/oder einem fahrerlosen Transportsystem (FTS) 40 (vgl. Fig. 6) gebildet wird. Eine fördertechnische Verbindung zwischen den Vereinzelungsstationen 20 und dem Sorter 14 ist nicht vorgesehen.

Die Zielstellen 22 können ebenfalls über eine Fördertechnik 26 an den (optionalen) Versand 24 gekoppelt sein. Eine fördertechnische Verbindung zwischen den Zielstellen 22 und dem Sorter 14 ist nicht vorgesehen.

Die Vereinzelungsstationen 20 und die Zielstellen 22 sind, über Umladeprozesse, an den Sorter 14 gekoppelt, wie es nachfolgend noch näher erläutert werden wird.

Außerdem weist das System 10 eine Steuereinrichtung 28 auf, die in Fig. 1 durch eine Wolke angedeutet ist. Die Steuereinrichtung 28 kann zentral oder dezentral verteilt im System 10 angeordnet sein. Die Steuereinrichtung 28 ist eingerichtet, mindestens eine oder mehrere der nachfolgend aufgezählten Funktionen auszuführen: eine Lagerplatzverwaltung, eine Auftragsverwaltung und eine Materialflusssteuerung. Die Steuereinrichtung 28 ist eingerichtet, eine zweistufige Kommissionierung durchzuführen. bei der in einer ersten Stufe, abhängig von einem gebildeten Batch, artikelorientiert ausgelagert und anschließend auf den Sorter 14 vereinzelt wird und in einer zweiten Stufe auftragsorientiert auf die Zielstellen 22 verteilt wird.

Es versteht sich, dass die Steuereinrichtung 28 weitere Funktionen eines intralogistischen Steuerungsrechners implementieren kann. Je nach Relevanz dieser Funktionen wird unten noch näher darauf eingegangen werden.

Ferner versteht es sich, dass die Steuereinrichtung 28 durch Hardware und/oder Software implementiert ist.

Selbstverständlich kann das System 10 weitere Komponenten von gewöhnlichen intralogistischen Systemen aufweisen, die hier nicht näher gezeigt sind und erläutert werden, wie zum Beispiel ein Wareneingang, ein Warenausgang, eine Pack-Station, ein manueller Kommissionierbereich, Durchlaufregale, vertikal und/oder horizontal umlaufende Regale, Shuttle-Regale und dergleichen.

In der Fig. 1 sind die Vereinzelungsstationen 20 mit der Fördertechnik 26, die in Fig. 1 generell mit Pfeilen angedeutet ist, an das Lager 12 gekoppelt. Das Lager 12 weist vorzugsweise eine (hier nicht gezeigte) Regalanordnung mit ein oder mehreren Regalen 48 (vgl. Fig. 6) auf, die Regalgassen 52 (vgl. Fig. 6) zwischen sich definieren, in denen (nicht gezeigte) Regalbediengeräte bewegt werden, um Lagerbehälter 54 in die Regale 48 einzulagern und aus den Regalen 48 auszulagern. Ausgelagerte Lagerbehälter 54 werden den Vereinzelungsstationen 20 artikelorientiert gemäß einem Batch (d.h. einer vorab zusammengefassten, feste Menge) von Kundenaufträgen zugeführt, um dort eine durch den Batch festgelegte Anzahl von Artikeln 30 (vgl. Fig. 6) identischen Artikeltyps, vorzugsweise einzeln, zu entnehmen und, vorzugsweise einzeln, an den Sorter 14, insbesondere einzelne Sorterschalen 32 (vgl. Fig. 6), abzugeben. Danach werden die Lagerbehälter 54 von den Vereinzelungsstationen 20 über die Fördertechnik 26 wieder in das Lager 12 zurücktransportiert und dort eingelagert. Der Sorter 14 verteilt die entnommenen und umgeladenen Artikel 30 mittels seiner Schalen 32 und gibt diese Artikel 30 auftragsorientiert an die Zielstellen 22 ab. Üblicherweise ist jeder der Zielstellen 22 einer der Aufträge zugeordnet, wie es nachfolgend noch näher erläutert werden wird.

Fig. 2 und 3 dienen im Wesentlichen einer Veranschaulichung eines Verlaufs der Hauptstrecke 16 sowie möglicher Anbindungen der Vereinzelungsstationen 20 (Fig. 2) und der Zielstellen 22 (Fig. 3) an die Hauptstrecke 16.

Fig. 2 zeigt einen exemplarischen Streckenverlauf einer Hauptstrecke 16 eines Sorters 14 und insbesondere eine Kopplung von exemplarisch fünf Vereinzelungsstationen 20 über jeweils eine maschenförmig ausgebildete Nebenstrecke 18 an die schleifenförmig ausgebildete, in sich geschlossene Hauptstrecke 16. Durch die maschenförmige Anbindung der Vereinzelungsstationen 20 an die schleifenförmige Hauptstrecke 16 können die (nicht gezeigten) Sorter-Schalen 32, die nachfolgend kurz auch nur als "Schalen 32" bezeichnet werden, in und aus einem Haupt(verkehrs)strom auf der Hauptstrecke 16 ein- und ausgeschleust werden.

Der Hauptstrom zeichnet sich dadurch aus, dass die Schalen 32 im Wesentlichen kontinuierlich, das heißt ohne Stopp, auf der Hauptstrecke 16 bewegt werden. Kontinuierlich bedeutet auch, dass der Hauptstrom getaktet bewegt werden kann. Es ist jedoch bevorzugt, dass der Verkehr auf der Hauptstrecke ohne Unterbrechung fließt.

Auch ist es möglich, die Geschwindigkeit der Schalen 32 auf der Hauptstrecke 16 (dynamisch, d.h. bedarfsabhängig) zu variieren. Die Hauptstrecke 16 kann zum Beispiel eine erste Zeitphase lang mit einer Höchstgeschwindigkeit betrieben werden und in einer darauffolgenden Zeitphase mit einer geringeren Geschwindigkeit. Üblicherweise werden jedoch alle Abschnitte der Hauptstrecke 16 mit der gleichen Geschwindigkeit betrieben.

Ferner versteht es sich, dass die Schalen 32 (vgl. Fig. 6) nicht fest (und dauerhaft) mit der Hauptstrecke 16 verbunden sind, wie es nachfolgend noch näher erläutert werden wird. Die Schalen 32 können allein durch Haftreibung zum Beispiel auf einem Gliederkettenförderer transportiert werden. Ein exemplarischer Gliederkettenförderer wird zum Beispiel von der Firma Bosch Rexroth unter der Bezeichnung "VarioFlow plus" angeboten und zum Beispiel als Werkstückträger-Umlaufsystem für Montagelinien in der Auto- und Elektronikindustrie eingesetzt. Ein anderer Gliederkettenförderer, der im System 10 eingesetzt werden kann, wird z.B. unter der Bezeichnung "FlexLink" von der Firma FlexLink angeboten.

Die Schalen 32, die auf den Nebenstrecken 18 transportiert werden, können zum Zwecke einer Beladung bei den Vereinzelungsstationen 20 auch (vorübergehend) angehalten werden, ohne den fließenden Verkehr auf der Hauptstrecke 16 zu stören.

Die Schalen 32 können durch jedes Transportbehältnis realisiert werden, das auf dem (nicht gezeigten) Fördermittel der Haupt- und Nebenstrecken 16 und 18 positionierbar ist. Exemplarische Transportbehältnisse sind ferner: Behälter, Tablare, und andere Ladungsträger, die in der Intralogistik eingesetzt werden. Behälter und Tablare unterscheiden sich im Wesentlichen in einer Höhe eines Rands, der eine Transportfläche (d.h. einen Boden) umgibt.

Die Nebenstrecken 18 sind allgemein über geeignete Verzweigungselemente V und Zusammenführungselemente Z an die Hauptstrecke 16 gekoppelt, wie es unten noch näher erläutert werden wird.

Es versteht sich, dass die Vereinzelungsstationen 20 über die gesamte Hauptstrecke 16 beliebig verteilt werden können. In der Fig. 2 sind die Vereinzelungsstationen 20 alle außerhalb der schleifenförmigen Hauptstrecke 16 angeordnet. Es versteht sich, dass eine oder mehrere Vereinzelungsstationen 20 auch innerhalb der schleifenförmigen Hauptstrecke 16 angeordnet sein können. Vorzugsweise werden die Vereinzelungsstationen 20 aber außerhalb, entlang der langen Abschnitte der Hauptstrecke 16 angeordnet. Die Vereinzelungsstationen 20 können auch in bestimmten Bereichen konzentriert werden, wie es exemplarisch in der Fig. 6 angedeutet ist.

Es versteht sich, dass die in den Figuren 2 bis 6 gezeigten Streckenverläufe lediglich exemplarischer Natur sind. In der Fig. 2 erstreckt sich die Hauptstrecke 16 im Wesentlichen entlang eines Rechtecks. Es versteht sich, dass der Streckenverlauf frei wählbar ist und andere Formen möglich sind. Streckenabschnitte müssen auch nicht zwingend parallel zueinander verlaufen, sondern können beliebig gewählt werden, indem sie z.B. Kurven, Steigungen und/oder Gefälle (dreidimensionale Streckenführung) aufweisen.

Fig. 3 zeigt die gleiche schleifenförmige Hauptstrecke 16 wie Fig. 2. Die Fig. 3 veranschaulicht exemplarisch eine (direkte) Kopplung der Zielstellen 22 an die Hauptstrecke 16. Die Vereinzelungsstationen 20 sind hier nicht gezeigt.

Trotz der direkten Anbindung stellen die Zielstellen 22 aber keine Hindernisse dar, die den Verkehr auf der Hauptstrecke 16 blockieren. Die Zielstellen 22 sind in der Fig. 3 lediglich in den Verlauf der Hauptstrecke 16 eingezeichnet, um zu verdeutlichen, dass keine anderen Förderelemente, Sammelelemente oder Umsetzeinrichtungen zwischen der Hauptstrecke 16 und den Zielstellen 22 vorgesehen sind. In diesem Fall erfolgt eine Abgabe der Artikel 30 von den Schalen 32 herunter, während sich die Schalen 32 weiterhin kontinuierlich auf der Hauptstrecke 16 bewegen.

Es versteht sich, dass die Zielstellen 22 aber genauso wie die Vereinzelungsstationen 20 (vergleiche Fig. 2) über Nebenstrecken 18 an die Hauptstrecke 16 gekoppelt werden können, wie es nachfolgend noch näher erläutert werden wird und in der Fig. 3 aber nicht gezeigt ist.

In der Fig. 3 sind exemplarisch sieben Zielstellen 22 gezeigt. Es versteht sich, dass mehr oder weniger Zielstellen 22 eingesetzt werden können.

Fig. 4 veranschaulicht eine maschenförmige Nebenstrecke 18, die wiederum über ein Verzweigungselement V und ein Zusammenführungselement Z an die Hauptstrecke 16 angekoppelt ist, wobei die Hauptstrecke 16 nur abschnittsweise mit einem Eingang E und einem Ausgang A angedeutet ist. Der Verkehr (vergleiche dunkle Pfeile) in der maschenförmigen Nebenstrecke 18 ist zum Verkehr auf der Hauptstrecke 16 gleichgerichtet. Die (nicht gezeigten) Schalen 32 bewegen sich sowohl auf der Nebenstrecke 18 als auch auf der Hauptstrecke 16 vom Eingang E zum Ausgang A.

In der Fig. 5 ist eine Streckenschleife bzw. Schleife 34 gezeigt. Die Schleife 34 wird gegenläufig zur Hauptstrecke 16 betrieben.

Fig. 6 zeigt eine Draufsicht auf eine Ausführungsform des Systems 10. Im oberen Bereich der Fig. 6 erstreckt sich das Lager 12. Im unteren Bereich der Fig. 6 erstreckt sich, an das Lager 12 anschließend, ein Bereich 36, wo sich herkömmlicherweise die klassische (Fördertechnik-)Vorzone befindet, die das Lager 12 klassisch fördertechnisch mit Kommissionierplätzen (vgl. Fig. 12) verbunden hat, wo die Kommissionierung stattfindet. Die klassische Vorzone ist in Fig. 6 durch den Sorter 14 ersetzt worden.

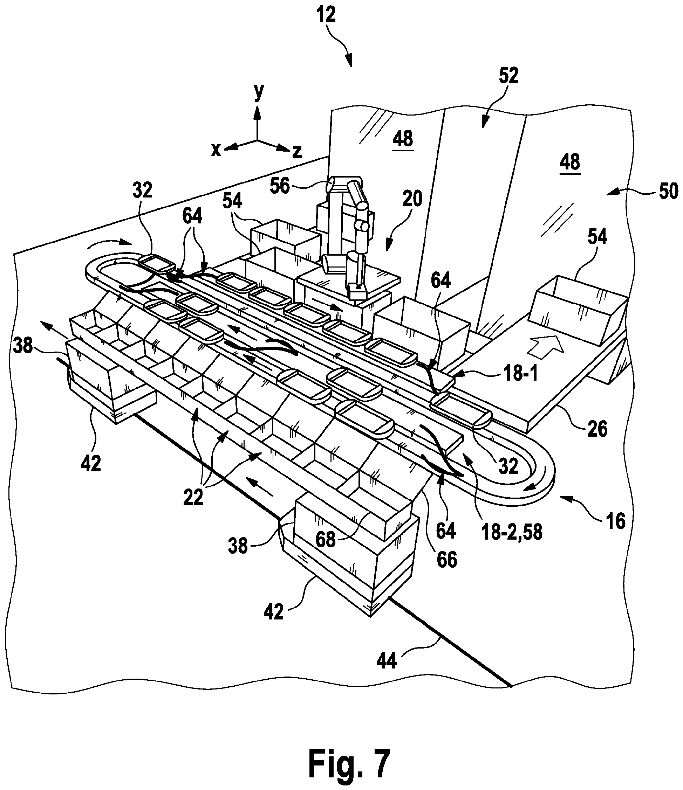

Unterhalb des Sorters 14 schließt sich in der Längsrichtung X eine Fördertechnik 26 zum Transport von Auftragsbehältern 38 an. Diese Fördertechnik 26 ist in der Fig. 6 nur teilweise dargestellt und erstreckt sich im Wesentlichen parallel zu einer Stirnseite des Lagers 12, das heißt parallel zur Querrichtung Z. Diese Fördertechnik 26 ist exemplarisch in Form eines fahrerlosen Transportsystems (FTS) 40 mit einer Vielzahl von fahrerlosen Transportfahrzeugen (FTF) 42 implementiert, die sich entlang von Fahrwegen 44 automatisiert bewegen. Trotz einer Führung entlang der Fahrwege 44 bewegen sich die FTF 42 innerhalb des Systems 10 autonom. Es versteht sich, dass alternativ zum FTS 40 auch andere Fördertechniktypen eingesetzt werden können, wie es unter Bezugnahme auf die Fig. 7 bis 9 noch näher erläutert werden wird.

Das Lager 12 der Fig. 6 ist exemplarisch als Regallager 46 mit Regalen 48 implementiert. Jeweils zwei der Regale 48 definieren ein Regalmodul 50 mit einer Regalgasse 52 dazwischen. Die Regale 48 und die Gasse 52 erstrecken sich parallel zur Längsrichtung X. In jeder der Regalgassen 52 bewegen sich ein oder mehrere Regalbediengeräte, die hier nicht näher gezeigt und bezeichnet sind. Die Regalbediengeräte (z.B. Shuttle) sind eingerichtet, Lagerbehälter 54 in die Regale 48 einzulagern, aus den Regalen 48 auszulagern und innerhalb der Regale 48 zu transferieren.

In der Fig. 6 sind exemplarisch vier Regalmodule 50-1 bis 50-4 gezeigt. Es versteht sich, dass mehr oder weniger Regalmodule 50 vorgesehen werden können. Die Regalmodule 50 sind z.B. als ein automatisiertes Kleinteilelager (AKL) implementiert.

Ferner versteht es sich, dass anstatt eines Regallagers 46 auch ein (nicht gezeigtes) Palettenlager, Tablarlager, Kartonlager oder ein Mischtyp aus diesen Lagertypen eingesetzt werden könnte, wobei nicht zwingend Regale 48 eingesetzt werden müssen.

Alternativ zu den Lagerbehältern 54 können auch andere Lagerbehältnisse eingesetzt werden, wie zum Beispiel Tablare, Kartons, Palletten, Hängefördertaschen oder andere Ladungsträger. Das Gleiche gilt für die Auftragsbehälter 38. Die Auftragsbehälter 38 können ebenfalls durch Tablare, Kartons, Palletten oder andere Ladungsträger implementiert werden.

Wenn hier von Auftragsbehältern 38 die Rede ist, so ist damit gemeint, dass ein Sammelbehältnis datentechnisch mit einem der Kundenaufträge verknüpft ist. Die Auftragsbehälter 38 können auch als Versandbehältnis benutzt werden, um ein Umpacken im Versand 24 zu vermeiden. In diesem Fall sind die Auftragsbehälter 38 vorzugsweise durch Kartons oder Kunststoffbehälter implementiert, die von den FTF 42 transportiert werden können.

In der Fig. 6 schließt sich an jedes der Regalmodule 50 eine (Lagerbehälter-) Fördertechnik 26 an, die hier exemplarisch in Form eines Rollenförderers 70 implementiert ist. Vorzugsweise ist für jedes Regalmodul 50 eine separate Lagerbehälter-Fördertechnik 26 vorgesehen, die insbesondere U-förmig an die Stirnseite der Regale 48 anschließt.

Alternativ können die Lagerbehälter-Fördertechniken 26 der verschiedenen Regalmodule 50 auch untereinander verbunden sein, was in Fig. 6 nicht gezeigt ist.

Die Lagerbehälter-Fördertechnik 26 ist eingerichtet, ausgelagerte Lagerbehälter 54 zu den Vereinzelungsstationen 20 zu bringen, um Artikel 56 aus den Lagerbehältern 54 zu entnehmen und an die Sorterschalen 32 abzugeben. Nach der Entnahme der Artikel 30 werden die Lagerbehälter 54 in das Lager 12 zwecks Einlagerung zurücktransportiert.

Die Lagerbehälter 54 sind "artikelrein" befüllt. Dies bedeutet, dass die Lagerbehälter 54 vorzugsweise nur Artikel 30 eines einzigen Artikeltyps beinhalten. Es versteht sich, dass die Lagerbehälter 54 auch in (nicht gezeigte) Fächer unterteilt sein können, um unterschiedliche Artikeltypen innerhalb des gleichen Lagerbehälters 54 zu lagern. Auch diese fachunterteilten Lagerbehälter 54 sind artikelrein.

Ferner ist es möglich, auch mehrere vorab bestimmte Artikeltypen ohne Fachunterteilung, d.h. chaotisch, im gleichen Lagerbehälter 54 zu bevorraten. Eine derartige Betriebsweise setzt aber voraus, dass die Vereinzelungsstationen 20 fähig sind, die (erwarteten) Artikeltypen, die sich in diesem Lagerbehälter 54 befinden, der aktuell präsentiert wird, zu unterscheiden. Vorzugsweise werden einfach unterscheidbare Artikeltypen (chaotisch gemischt) in diesem typenreinen Lagerbehälter 54 gelagert. In diesem Fall bestimmt die Steuereinrichtung 15 vorab den Mix der verschiedenen Artikeltypen für jeden dieser durchmischten typenreinen Lagerbehälter 54. Für diesen Zweck kann die Steuereinrichtung 28 die Funktion eines Lagerverwaltungsrechners aufweisen.

Die Steuereinrichtung 28 wird ferner zur Auftragsbearbeitung, und zur Batch-Bildung in der ersten Kommissionierstufe, eingesetzt. Dazu wird eine vorbestimmte Menge von Kunden- bzw. Kommissionieraufträgen gesammelt und hinsichtlich der darin enthaltenen Artikeltypen (bzw. Auftragszeilen) analysiert, um möglichst wenige Lagerbehälter 54 auszulagern, die die benötigten Artikeltypen gemäß den Kundenaufträgen enthalten.

An den Vereinzelungsstationen 20 werden diese Artikeltypen dann aus den entsprechenden Lagerbehältern 54 in der entsprechenden (Gesamt-) Anzahl entnommen und auf die Schalen 32 verteilt bzw. umgeladen. Vorzugsweise erfolgt die Umladung immer so, dass ein Stück (d.h. ein Artikel 30) auf jede der Schalen 32 gegeben wird. Jedoch ist es auch möglich, mehrere Stück des gleichen Artikeltyps gleichzeitig aus den Lagerbehältern 54 zu entnehmen und auf eine einzige Schale 32 umzuladen, wenn die entsprechende Auftragzeile des zugehörigen Kundenauftrags mehrere Stück des gleichen Artikeltyps verlangt. In diesem Fall ist die Vereinzelungsstation 20 eingerichtet, mehrere Stück gleichzeitig aus dem Lagerbehälter 54 zu entnehmen.

Die Vereinzelungsstationen 20, von denen in der Fig. 6 exemplarisch vier gezeigt sind, können automatisiert und/oder manuell betrieben werden.

In der Fig. 6 ist für jedes der Regalmodule 50-1 bis 50-4 jeweils eine Vereinzelungsstation 20 vorgesehen. Die Vereinzelungsstation 20 der Fig. 6 sind exemplarisch durch jeweils einen Roboter 56 implementiert. Alternativ können (nicht gezeigte) Menschen eingesetzt werden. Ferner ist es möglich, dass einige der Vereinzelungsstationen 20 durch die Roboter 56 betrieben werden, während andere Vereinzelungsstationen 20 durch die Menschen betrieben werden.

Nun wird der Sorter 14 der Fig. 6 näher betrachtet werden.

Der Sorter 14 der Fig. 6 repräsentiert eine ringförmige bzw. geschlossene Transportstruktur, die analog zu den Figuren 2 bis 5 aufgebaut ist. Die in sich geschlossene, schleifenförmige Hauptstrecke 16 ist in Fig. 6 durch eine Strichlinie angedeutet. Die Hauptstrecke 16 wird kontinuierlich exemplarisch im Uhrzeigersinn betrieben. Ein Verkehr der Schalen 32 wird im Wesentlichen nicht gestoppt. Dies bedeutet, dass die Schalen 32 auf der Hauptstrecke 16 vorzugsweise mit einer konstanten Geschwindigkeit befördert werden, insbesondere wenn die Hauptstrecke 16 durch einen in sich geschlossenen Gliederkettenförderer implementiert ist. Die konstante Geschwindigkeit auf der Hauptstrecke 16 kann auch durch eine getaktete Bewegung erfolgen.

An die Hauptstrecke 16 schließen sich eine Vielzahl von Nebenstrecken 18 an. Insbesondere ist für jede der Vereinzelungsstationen 20-1 bis 20-4 eine eigene Nebenstrecke 18 vorgesehen. Die Schalen 32 können von der Hauptstrecke 16 auf diese Nebenstrecken 18 ausgeschleust werden, wo die Schalen 32 dann nicht länger kontinuierlich bewegt werden müssen. Die Schalen 32 können auf den Nebenstrecken 18 auch anhalten.

Die Schalen 32 halten vorzugsweise in einer unmittelbaren Nähe der Roboter 56 an, um es dem Roboter 56 zu ermöglichen, einen gewünschten Artikel 30 aus dem Lagerbehälter 54 zu entnehmen und auf eine der Schalen 32 zu geben. Sobald die Schale 32 mit dem Artikel 30 beladen ist, kann die beladene Schale 32 wieder in die Hauptstrecke 16 eingeschleust werden, um die ihr zugeordnete Zielstelle 22 zu erreichen, wie es nachfolgend noch näher erläutert wird.

Ergänzend und alternativ können leere und beladene Schalen 32 auf einer oder mehreren Pufferstrecken 58 vorübergehend gespeichert werden. In der Fig. 6 ist exemplarisch eine Pufferstrecke 58 gezeigt, die über ein oder mehrere Zuführstrecken 60 und eine oder mehrere Abführstrecken 62 mit der Hauptstrecke 16 verbunden ist. Die Pufferstrecke 58 erstreckt sich z.B. im Wesentlichen parallel zur Querrichtung Z und ist vorzugsweise innerhalb der schleifenförmigen Hauptstrecke 16 angeordnet.

Es versteht sich, dass generell innerhalb der schleifenförmigen Hauptstrecke 16 ergänzend (nicht gezeigte) Querverbindungsstrecken vorgesehen werden können, insbesondere um die (Transportwege) zwischen den Vereinzelungsstationen 20 und den Zielstellen 22 individuell zu verkürzen. Im Beispiel der Fig. 6 könnte sich eine derartige Querverbindungsstrecke mittig von dem oberen langen Abschnitt der Hauptstrecke 16, der sich parallel zur Querrichtung Z erstreckt, mittig zum unteren langen Abschnitt der Hauptförderstrecke 16, der sich ebenfalls parallel zur Querrichtung Z erstreckt, verlaufen, Diese Querverbindungsstrecke verläuft dann in der Längsrichtung X.

Das System 10 der Fig. 6 weist ferner exemplarisch vier Zielstellen 22-1 bis 22-4 auf. Die Zielstellen 22 der Fig. 6 werden exemplarisch ebenfalls automatisiert betrieben, das heißt die Zielstellen 22 sind jeweils mit einem Roboter 56 versehen. Alternativ können die Zielstellen 22 auch manuell betrieben werden.

Die Zielstellen 22 der Fig. 6 sind wiederum jeweils über eine individuelle Nebenstrecke 18 mit der Hauptstrecke 16 verbunden. Dies ermöglicht es, die Schalen 32 an den Zielstellen 22 anzuhalten, damit die Roboter 56 die Artikel 30, die auf den Schalen 32 positioniert sind, auftragsorientiert in die Auftragsbehälter 38 umladen können. Die entsprechenden Auftragsbehälter 38 werden durch die FTF 42 in einen Aktionsbereich des jeweiligen (Zielstellen-) Roboters 56 transportiert, damit der Roboter 56 den von der Schale 32 entnommenen Artikel 30 in den entsprechenden Auftragsbehälter 38 abgegeben kann.

Die Steuerungseinrichtung 28 ist eingerichtet, alle (beladenen) Schalen 32, die zu einem spezifischen Auftrag gehören, (synchronisiert) zur zugehörigen Zielstelle 22 zu lenken. Dazu können Schalen 32 direkt von den Vereinzelungsstationen 20 und von den Pufferstrecken 58 zur Zielstelle 22 gelenkt werden.

An der Zielstelle 22 wird die zweite Kommissionierstufe abgeschlossen. Dies bedeutet, dass die Schalen 32 auftragsorientiert von den Vereinzelungsstationen 20 und/oder Pufferstrecken 58 zu der Zielstelle 22 transportiert werden, die durch ihren Kundenauftrag bestimmt ist. Wenn der Kundenauftrag mehrere Artikel (Stück und/oder Artikeltyp) 30 umfasst, werden die entsprechend bestückten Schalen 32 zu ihrer Zielstelle 22 bewegt. Diese Schalen 32 können insbesondere sequenziert an ihrer Zielstelle 22 ankommen. Dazu steuert die Steuereinrichtung 28 den Materialfluss einsprechend. Die Schalen 32 können sich gegenseitig überholen, indem zum Beispiel die Pufferstrecke 58 benutzt wird.

Ferner ist es möglich, bestimmte Artikel 30, die einem speziellen Auftrag zugeordnet sind, vorab zu kommissionieren, dies bedeutet, dass diese bestimmten Artikel 30 zu einem früheren Zeitpunkt bereits auf eine oder mehrere der Schalen 32 geladen werden, wobei die entsprechenden, beladenen Schalen 32 dann in einer der Pufferstrecken 58 (längerfristig) "geparkt" werden. Sobald alle Artikel 30, die zu diesem speziellen Auftrag gehören, sich auf Schalen 32 des Sorters 14 befinden, können diese Schalen 32 (orchestriert) zu ihrer Zielstelle 22 bewegt werden.

Die Steuereinrichtung 28 verfügt zu diesem Zwecke also auch über die Funktion eines Materialflussrechners.

Alternativ zu den maschenförmigen Pufferstrecken 58 kann der Sorter 14 allgemein auch (nicht gezeigte) Stichstrecken aufweisen. Eine Stichstrecke ist vergleichbar mit einer Sackgasse. Dies bedeutet, dass die Stichstrecke bidirektional betrieben werden muss, um die Stichstrecke mit Schalen 32 zu befüllen und zu entleeren. Insbesondere die Stichstrecken eignen sich für eine langfristige Pufferung der Schalen 32. Dabei werden vorzugsweise entweder nur leere Schalen 32 oder nur beladene Schalen 32 gepuffert. Wenn beladene Schalen 32 gepuffert werden, erfolgt die Pufferung vorzugsweise auftragsorientiert. Dies bedeutet, dass vorzugsweise jede der Stichstrecken immer nur Schalen 32 puffert, die zum gleichen Kundenauftrag gehören.

Es versteht sich, dass die Hauptstrecke 16 eine endliche Kapazität zur Aufnahme der Schalen 32 hat. Die Schalen 32 sind vorzugsweise identisch dimensioniert. Die geometrische Länge der Hauptstrecke 16 resultiert in einer maximalen Aufnahmekapazität für die Schalen 32.

Der vorliegende Sorter 14 ist aber in der Lage, mehr Schalen 32 zu handhaben als durch seine maximale Kapazität vorgegeben ist. Die Nebenstrecken 18 und Pufferstrecken 58 (und gegebenenfalls auch die Stichstrecken) ermöglichen es, dass innerhalb des Systems 10 mehr Schalen 32 gleichzeitig gehandhabt werden. Selbstverständlich kann die Hauptstrecke 16 nicht mehr beladene Schalen 32 aufnehmen, als es durch die Gesamtkapazität vorgegeben ist. Dennoch können weitere Schalen 32 insbesondere im Bereich der Nebenstrecken 18 (und/oder 58) gehandhabt werden, die die Vereinzelungsstationen 20 und die Zielstellen 22 an die Hauptstrecke 16 anbinden.

Fig. 7 zeigt eine perspektivische Ansicht einer weiteren Ausführungsform des Systems 10, das sehr ähnlich zum System 10 der Fig. 6 aufgebaut ist, sodass nachfolgend im Wesentlichen die Unterschiede näher erläutert werden.

Das Lager 12 weist lediglich ein einziges Regalmodul 50 mit zwei Regalen 48 und einer Regalgasse 52 auf. Der Sorter 14 umfasst eine schleifenförmige Hauptstrecke 16 und zwei Nebenstrecken 18-1 und 18-2. Die Nebenstrecke 18-1 dient zur Anbindung der automatisierten Vereinzelungsstation 20, die durch einen Roboter 56 implementiert ist. Die Nebenstrecke 18-2 dient als Pufferstrecke 58.

Die Nebenstrecken 18-1 und 18-2 verlaufen im Wesentlichen parallel zur Hauptstrecke 16 und sind vorzugsweise unmittelbar angrenzend an die Hauptstrecke 16 angeordnet.

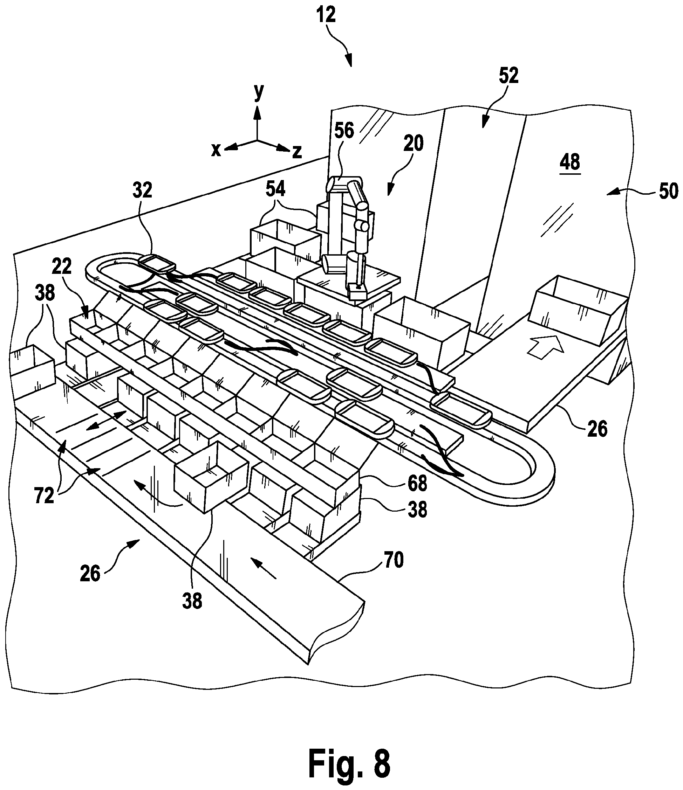

Ferner sind in der Fig. 7 Verzweigungselemente V und Zusammenführungselemente Z in Form von Schienen 64 gezeigt. Die Schalen 32 können zwischen der Hauptstrecke 16 und den Nebenstrecken 18 (und/oder 58) mittels der beweglich gelagerten Schienen 64 wechseln, indem die Schalen 32 durch die Bewegung des Förderers, der die Strecken 16 und 18 implementiert, passiv übergeführt werden. Es versteht sich, dass die Verzweigungselemente V und die Zusammenführungselemente Z (vergleiche Figuren 4 und 5) auch aktiv betrieben werden können, zum Beispiel durch einen (nicht dargestellten) heb- und senkbaren Riemenübersetzer 72 (vgl. Fig. 8) oder einen (nicht gezeigten) Schieber.

Der Sorter 14 ist so dimensioniert, dass er in der Querrichtung Z eine ähnliche Breite wie das Regalmodul 50 aufweist.

Der Sorter 14 grenzt unmittelbar an eine Vielzahl von Zielstellen 22 an. In der Fig. 7 sind exemplarisch acht Zielstellen 22 gezeigt, die als Rutschen 66 und Sammelbehälter 68 implementiert sind. Die Sammelbehälter 68 können aktiv nach unten geöffnet werden, um gesammelte Artikel 30 in die Auftragsbehälter 38 zu geben, die z.B. mittels FTF 42 unter den Sammelbehältern 68 positioniert werden.

Die Zielstellen 22 koppeln direkt an die Hauptstrecke 16 (vergleiche Fig. 3), indem die Rutschen 66 in unmittelbarer Nähe der Hauptstrecke 16 angeordnet sind. Die Rutschen 66 fallen leicht in Richtung der Sammelbehälter 68 ab, sodass die Artikel 30 unter Schwerkraft selbstständig in die Sammelbehälter 68 rutschen.

Im Falle einer direkten Anbindung der Zielstellen 22 an die Hauptstrecke 16, das heißt ohne das ein Roboter 56 oder ein Mensch zum Entladen eingesetzt wird, verfügen die Schalen 32 über einen (nicht gezeigten) Mechanismus, um den Artikel 30, der auf die jeweilige Schale 32 geladen ist, selbststätig an die gewünschte Rutsche 66 (auftragsorientiert) abzugeben. Zu diesem Zweck kann die Schale 32 zum Beispiel über einen Kippmechanismus verfügen, der durch eine (nicht dargestellte) Kulisse während der Vorbeifahrt der Schalen 32 an der jeweiligen Zielstelle 22 ausgelöst wird. Die Schalen 32 halten beim Entladen also nicht an.

Alternativ kann die Schale 32 permanent schräggestellt sein, wobei ein umlaufende Wand geöffnet und geschlossen werden kann (nicht gezeigt).

Sobald alle Artikel 30, die zu einem Kommissionierauftrag gehören, in dem zugeordneten Sammelbehälter 68 gesammelt sind und sobald der entsprechende Auftragsbehälter 38 unterhalb des entsprechenden Sammelbehälters 68 positioniert ist, kann der Sammelbehälter 68 automatisiert durch die Steuereinrichtung 28 entleert werden, indem zum Beispiel ein (nicht gezeigter) Boden des Sammelbehälters 68 geöffnet wird.

Fig. 8 zeigt eine perspektivische Ansicht einer weiteren Ausführungsform des Systems 10, die nahezu identisch zum System 10 der Fig. 7 ausgebildet ist. Das System 10 der Fig. 8 unterscheidet sich vom System 10 der Fig. 7 lediglich in der Fördertechnik 26, die die Auftragsbehälter 38 zu den Zielstellen 22 transportiert. Die Fördertechnik 26 für die Auftragsbehälter 38 ist hier exemplarisch als Rollenförderer 70 implementiert, der über exemplarische Riemenausschleuser 72 die Auftragsbehälter 38 unterhalb der Sammelbehälter 68 positioniert.

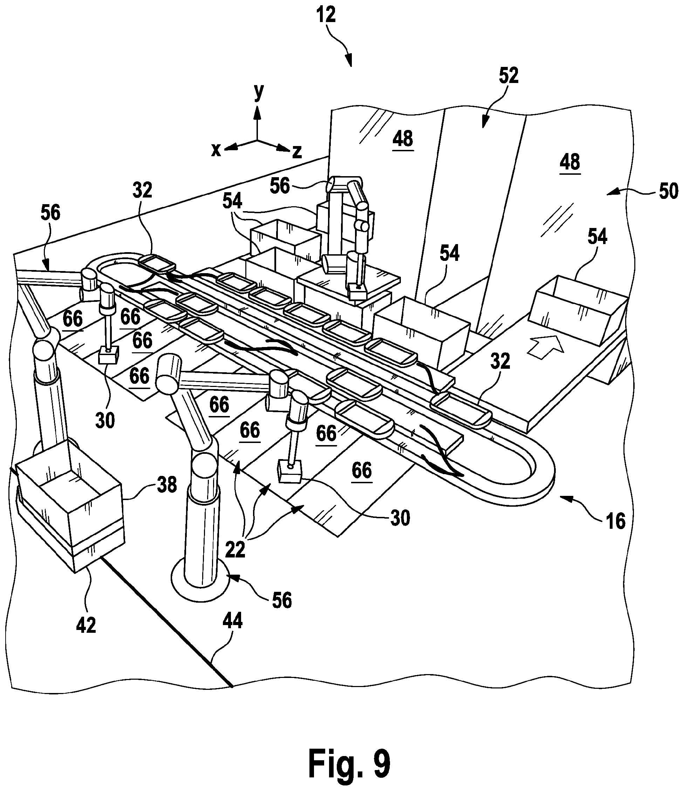

Fig. 9 zeigt eine weitere Ausführungsform des Systems 10, die sehr ähnlich zu den Ausführungsformen der Figuren 7 und 8 ausgebildet ist. Die Ausführungsform der Fig. 9 unterscheidet sich von den Ausführungsformen der Figuren 7 und 8 darin, dass die Zielstellen 22 allein durch Rutschen 66 definiert sind, die automatisiert von Robotern 56 bedient werden. Jede der Rutschen 66 ist gegenüber der Horizontalen geneigt, sodass die Artikel 30 selbsttätig an das untere Ende der Rutsche 66 abrutschen und dort gesammelt werden, sodass die Roboter 56 die Artikel 30 am unteren Ende entnehmen und in die Auftragsbehälter 38 umsetzen können, die hier wiederum mittels eines FTS 40 transportiert werden. Jede der Rutschen 66 stellt eine eigene Zielstelle dar.

Die Roboter 56 sind üblicherweise mit Einrichtungen zur Lageerkennung der Artikel 30 ausgestattet, um die Greifeinheit geeignet steuern zu können. Es können weiter Mittel zur Artikelidentifikation am Roboter, insbesondere an der Greifeinheit, vorgesehen sein. Es ist daher möglich, den durch die Greifeinheit bedienbaren Zielstellenbereich physisch einteilig, logisch beliebig geteilt, zu gestalten. Damit kann die Anzahl der (logischen) Zielstellen flexibel festgelegt werden.

Es versteht sich, dass die verschiedenen Lösungen für die Zielstellen 22, die in den Figuren 7 bis 9 gezeigt sind, beliebig miteinander kombiniert werden können. Ferner versteht es sich, dass die Zielstellen 22 auch manuell bedient werden können, insbesondere wenn Umladevorgänge erforderlich sind.

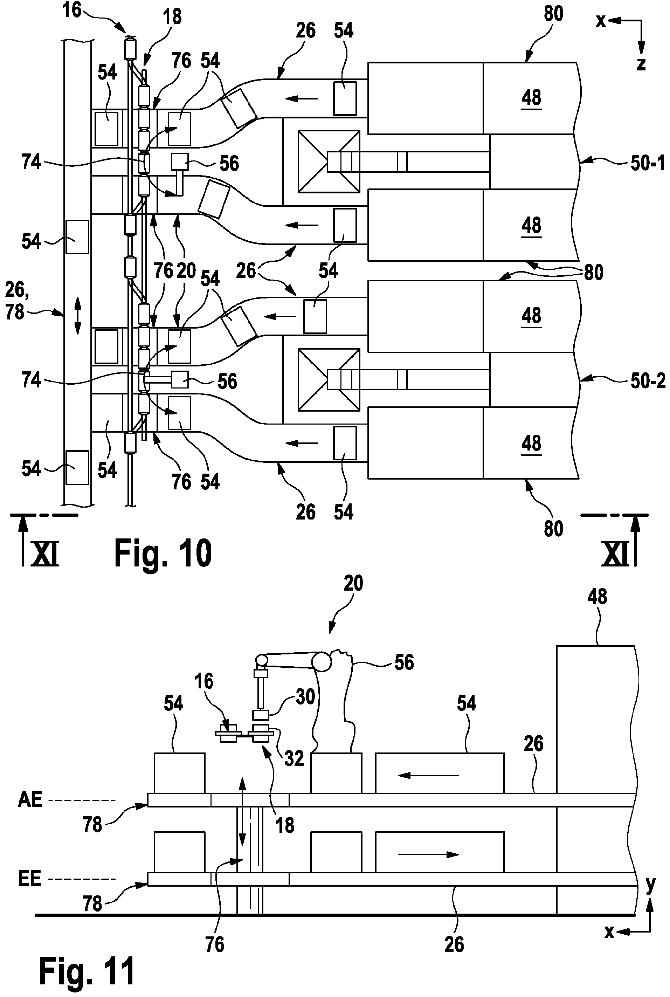

Unter Bezugnahme auf die Fig. 10 und 11 wird nachfolgend eine Möglichkeit der fördertechnischen Anbindung von einer oder mehreren Vereinzelungsstationen 20 an das Lager 12 bzw. das entsprechende Regalmodul 50 erläutert werden. Diese fördertechnische Anbindung stellt eine eigenständige Erfindung dar, die von der Verwendung eines Sorters 14 unabhängig ist und die nachfolgend noch näher definiert wird.

Fig. 10 zeigt eine Draufsicht und Fig. 11 zeigt eine Seitenansicht entlang einer Linie XI-XI in der Fig. 10.

Die Anbindung gemäß den Fig. 10 und 11 zeichnet sich dadurch aus, dass mehrere Förderstränge pro Vereinzelungsstation 20, insbesondere in unterschiedlichen Ebenen, vorgesehen sind. In Fig. 11 ist exemplarisch gezeigt, dass die Auslagerung der Lagerbehälter 54 in einer Auslagerungsebene AE erfolgt und die Einlagerung in einer darunter angeordneten Einlagerungsebene EE erfolgt.

Ferner zeichnet sich die Anwendung gemäß den Fig. 10 und 11 dadurch aus, dass in der Auslagerungsebene AE jeder der Roboter 56 der Vereinzelungsstationen 20 über mindestens zwei separate Fördertechniken 26 mit den Lagerbehältern 54 versorgt wird.

Dies ermöglicht es, dass jeder der Roboter 56 durch eine (z.B. annähernd halbkreisförmige) Schwenkbewegung, die in Fig. 10 durch einen Pfeil 74 angedeutet ist zwischen zwei Lagerbehältern 54 bzw. Entnahmepositionen hin und her bewegt werden kann, um die Artikel 30 aus den Lagerbehältern 54 aufzunehmen, wobei ein aufgenommener Artikel 30 (nicht gezeigt) z.B. in der Mitte der Schwenkbewegung an eine Schale 32 abgegeben werden kann, indem der Artikel einfach fallengelassen wird.

Es versteht sich, dass der Streckenverlauf der Fördertechniken 26 für die Lagerbehälter 54 und der Nebenstrecke 18 für die Schalen 32 entsprechend angeordnet ist. Dies bedeutet, dass die Aufnahmepunkte bzw. Entnahmepositionen aus den Lagerbehältern 54 und der Abgabepunkt an die Schale 32 vorzugsweise auf einer Kreisbahn mit konstantem Radius liegen.

Ferner können die Fördertechniken 26 für die Lagerbehälter 54 in der Höhe so angeordnet sein, dass sich der Roboter 56 nur wenig in der Höhenrichtung Y bewegen muss, um die Artikel 30 aufzunehmen. Analoges gilt für die Anordnung der Schalen 32 bei der Abgabe.

Diese Art der Anordnung verkürzt eine Zykluszeit bei der Vereinzelung der Artikel 30 aus den Lagerbehältern 54 in die Schalen 32. Die Lagerbehälter 54 können auf der einen Fördertechnik 26 ausgetauscht werden, während der Roboter 56 aus einem Lagerbehälter 54 greift, der auf der gegenüberliegend angeordneten Fördertechnik 26 bereitgestellt ist. Der Roboter 56 muss also nie auf einen neuen Lagerbehälter 54 warten.

Ferner kann der Roboter 56 einen entnommenen Artikel 30 auf die Schale 32 fallen lassen, während sich der Roboter 56 von dem einen Aufnahmeort zum gegenüberliegenden Aufnahmeort auf der Kreisbahn bewegt. Der Roboter 56 muss nicht zwingend anhalten, um den Artikel 30 an die Schale 32 abzugeben.

In einer nicht bevorzugten Betriebsart kann der Roboter auch Artikel 30 auf Schalen 32 platzieren, die sich in Bewegung auf der Hauptstrecke 16 des Sorters 14 befinden. Dies kann bei vermindertem Durchsatz und damit auch verminderter Fördergeschwindigkeit des Sorters zu einem verschleissoptimierten Anlagenbetrieb beitragen.

Die Fördertechniken 26 werden vorzugsweise unidirektional betrieben. In der Auslagerungsebene AE werden die Fördertechniken 26 so betrieben, dass die Förderrichtung vom Lager 12 weggerichtet ist. In der Einlagerungsebene EE werden die Fördertechniken 26 so betrieben, dass die Lagerbehälter 54 in das Lager 12 hineintransportiert werden. Dies ist in den Fig. 10 und 11 durch entsprechende Pfeile angedeutet.

Um den Rücktransport der Lagerbehälter 54 zu bewältigen, aus denen die Artikel 30 bereits entnommen wurden, ist z.B. die Einlagerungsebene EE vorgesehen. Um die Höhendifferenz zwischen der Auslagerungsebene AE und der Einlagerungsebene EE zu überwinden ist mindestens eine Hubeinrichtung 76 vorgesehen, die über eine entsprechende Plattform verfügt, die in der vertikalen Richtung Y zwischen den Ebenen AE und EE beweglich ist (vergleiche Fig. 11).

Sobald der Roboter 56 die erforderliche Gesamtzahl der Artikel 30 aus dem oder den Lagerbehältern 54 (links und rechts) entnommen hat, wird der Lagerbehälter 54 aus der Entnahmeposition zur Hubeinrichtung 76 transportiert. Die Hubeinrichtung 76 transportiert diesen Lagerbehälter 54 dann aus der Auslagerungsebene AE in die Einlagerungsebene EE. Von dort kann dieser Lagerbehälter 54 wieder in das Regal 48 zurücktransportiert werden.

Alternativ können die Lagerbehälter 54 die Hubeinrichtung 76 auch überfahren, um zu einer Verteilstrecke 78 zu gelangen, die sich in den Figuren 10 und 11 exemplarisch parallel zur Querrichtung Z erstreckt. Die Verteilstrecke 78 erlaubt einen Austausch der Lagerbehälter 54 zwischen den Regalmodulen 50-1 und 50-2 (vergleiche Fig. 10).

Über die Verteilstrecke 78 kann auch ein (nicht dargestellter) Wareneingangsbereich angebunden werden, um das Lager 12 mit neuen Artikeln zu befüllen bzw. nachzufüllen.

Es versteht sich, dass die Regalmodule 50 entsprechende Regal-Hubeinrichtungen 80 aufweisen, um die Lagerbehälter 54 über die (hier nicht dargestellten) Regalebenen in der Höhenrichtung Y verteilen zu können.

Manuell betriebene Vereinzelungsstationen 20 (hier nicht gezeigt) können ebenfalls angebunden werden, um nicht roberfähige Artikel zu picken. Die Konsolidierung mit roboterfähgen Artikeln erfolgt über den Sorter 14 bzw. die Schalen 32.

Die Lagerbehälter 54 können über die Hubeinrichtungen 80 auch "loopen", d.h. erneut angedient werden, z.B. um Pickfehler zu korrigieren, ohne dass sie vorher eingelagert werden.

Zurückkehrend zu den Figuren wird noch festgestellt, dass, wenn oben von (Sorter-) Schalen 32 die Rede war, es sich versteht, dass die Schalen 32 nicht zwingend schalenförmig ausgebildet sein müssen. Die Schalen 32 können auch durch Behälter, Tablare, Werkstückträger oder dergleichen implementiert sein. Es ist aber von Vorteil, wenn die Schalen 32 einen im Wesentlichen umlaufenden Rand aufweist, um zu verhindern, dass Artikel, die auf die Schale 32 geladen wurden, während des Transports von der Vereinzelungsstation 20 zur zugeordneten Zielstelle 22 von der Schale 32 herunterfallen können.

Wie bereits oben erwähnt, sind die Schalen 32 nicht dauerhaft mit den Fördermitteln der Haupt- und Nebenstrecken 16 und 18 verbunden. Die Schalen 32 sind in diesem Sinne lose auf den Fördermitteln der Haupt- und Nebenstrecken 18 positionierbar, wobei die Schalen 32 vorzugsweise durch die Haftreibung, die durch ihr eigenes Gewicht bestimmt ist, auf dem Fördermittel gehalten werden.

Allgemein gilt ferner, dass der Sorter 14 auch an andere (logistische) Bereiche des Systems 10 angebunden werden kann. Zur Anbindung werden hier nicht näher gezeigte und bezeichnete Strecken verwendet, die analog zu den oben erwähnten Nebenstrecken 18 und Stichstrecken ausgebildet sind.

Der Sorter 14 könnte zum Beispiel an einen weiteren (hier nicht gezeigten) Lagerbereich angebunden werden, wo eine manuelle Kommissionierung, insbesondere auch nach dem Mann-zur Ware-Prinzip, stattfindet. Die entsprechende Fördertechnik könnte entlang der Regale geführt sein, damit der Mensch die Schale 32 nicht tragen muss.

Ferner könnte der Sorter 14 an einen hier nicht gezeigten Puffer für leere Schalen 32 angebunden sein, um den Sorter 14 je nach Bedarf mit weiteren (leeren) Schalen 32 zu versorgen, die dann an den Vereinzelungsstationen 20 beladen werden.

Ferner könnten Umladestationen vorgesehen sein, wo die Artikel 30 aus Taschen eines (nicht gezeigten) Hängeförderers auf die Schalen 32 umgeladen werden.

Schließlich ist es möglich, zusätzlich einen Puffer für beladene Schalen 32 an den Sorter 14 anzuschließen. In diesem Puffer können Schalen 32 gepuffert werden, die zum Beispiel vorausschauend mit den Artikeln 30 beladen werden. Dies bedeutet, dass zum Zeitpunkt der Beladung eventuellnoch gar kein entsprechender Kundenauftrag vorliegt oder Aufträge zeitlich verschoben werden (müssen). Die Beladung erfolgt in diesem Fall auf Basis von statistischen Überlegungen, in dem Kundenaufträge aus der Vergangenheit ausgewertet werden und solche Artikel bereits vorab geladen werden, die besonders häufig bzw. immer innerhalb eines Zeitraums (zum Beispiel innerhalb eines Tages) in den Kundenaufträgen erscheinen.

Ferner versteht es sich, dass die Roboter 56 an den Zielstellen 22 auch direkt aus den Schalen 32 greifen und an die Auftragsbehälter 38 abgeben können, sodass die Rutschen 66 und/oder die Sammelbehälter 68 nicht zwingend benötigt werden.

**Bezugszeichenliste**

| | | | |
|---|---|---|---|
| 10 | Lager- und Kommissioniersystem | 64 | Schiene |
| 12 | Lager | 66 | Rutsche |
| 14 | Sorter | 68 | Sammelbehälter |
| 16 | Hauptstrecke | 70 | Rollenförderer |
| 18 | Nebenstrecke | 72 | Riemenausschleuser |
| 20 | Vereinzelungsstation | 76 | Hubeinrichtung |
| 22 | Zielstelle | 74 | Schwenkbewegung |
| 24 | Versand | 78 | Verteilstrecke |
| 26 | Fördertechnik | 80 | Regal-Hubeinrichtung |
| 28 | Steuereinrichtung | | |
| 30 | Artikel | | |
| 32 | Sorter-Schale | | |
| V | Verzweigungselement | | |
| Z | Zusammenführungselement | | |
| E | Eingang | | |
| A | Ausgang | | |
| 34 | Schleife | | |
| 36 | Vorzone | | |
| 38 | Auftragsbehälter | | |
| 40 | Fahrerloses Transportsystem | | |
| 42 | Fahrerloses Transportfahrzeug | | |
| 44 | Fahrweg | | |
| 46 | Regallager | | |
| 48 | Regal | | |
| 50 | Regalmodul | | |
| 52 | Regalgasse | | |
| 54 | Lagerbehälter | | |
| 56 | Roboter | | |
| 58 | Pufferstrecke | | |
| 60 | Zuführstrecke | | |
| 62 | Abführstrecke | | |

## Patentansprüche

1. Lager- und Kommissioniersystem (10), das aufweist:
eine Steuereinrichtung (28), die zum Durchführen einer zweistufigen Kommissionierung von Artikeln (30) eingerichtet ist, wobei die zweistufige Kommissionierung eine erste artikelorientierte Kommissionierstufe und eine zweite auftragsorientierte Kommissionierstufe aufweist;
ein Lager (12), wobei die Artikel (30) im Lager (12) artikelrein in Lagerbehältern (54) gelagert sind und wobei die Artikel (30) in der ersten Kommissionierstufe artikelorientiert aus dem Lager (12) ausgelagert werden;
einen Sorter (14), der aufweist:
eine schleifenförmige Hauptstrecke (16);
mindestens eine Nebenstrecke (18), wobei jede der Nebenstrecken (18), vorzugsweise maschenförmig, an die Hauptstrecke (16) gekoppelt ist und diskontinuierlich betreibbar ist; und
eine Vielzahl von Sorter-Schalen (32), wobei jede der Schalen (32) eingerichtet ist, entlang der Strecken (16, 18) bewegt zu werden und in die Hauptstrecke (16) ein- und ausgeschleust zu werden;
eine oder mehrere Vereinzelungsstationen (20), wobei jede der Vereinzelungsstationen (20):
an das Lager (12) gekoppelt ist, um mit Lagerbehältern (54) versorgt zu werden; und
zum Umladen der Artikel (30) aus den Lagerbehältern (54) auf die Schalen (32) eingerichtet ist, um in der ersten Kommissionierstufe die Artikel (30) auftragszeilenweise und/oder einzeln auf jeweils eine der Schalen (32) umzusetzen, die sich auf der einen Nebenstrecke (18) befindet;
und eine Vielzahl von automatisiert und/oder manuell betrieben Zielstellen (22) für die zweite Kommissionierstufe, wobei jede der Zielstellen (22) gekoppelt ist:
an eine der Nebenstrecken (18); und/oder
direkt an die Hauptstrecke (16);
wobei die Steuereinrichtung (28) eingerichtet ist, in der ersten Kommissionierstufe eine Auslagerung der Lagerbehälter (54) aus dem Lager (12) artikelorientiert gemäß einer Batch-Kommissionierung zu veranlassen, **dadurch gekennzeichnet, dass** die Hauptstrecke (16) kontinuierlich betrieben wird und dass jede der Vereinzelungsstationen (20) über eine der Nebenstrecken (18) an die Hauptstrecke (16) gekoppelt ist.

2. System (10) nach Anspruch 1, das ferner eine Fördertechnik (26) für Auftragsbehälter (38) aufweist, die die Zielstellen (22) mit Auftragsbehältern (38) versorgt.

3. System (10) nach Anspruch 1 oder 2, wobei jede der Zielstellen (22) eine Rutsche (66) und/oder einen Sammelbehälter (68) aufweist.

4. System (10) nach einem der Ansprüche 1 bis 3, wobei die Schalen (32) und/oder die Zielstellen (22) eingerichtet sind, Artikel (30), die auf die jeweilige Schale (32) geladen sind, auftragsorientiert am Ort der entsprechenden Zielstelle (22) automatisiert zu entladen, insbesondere abzukippen.

5. System (10) nach einem der Ansprüche 1 bis 4, wobei der Sorter (14) ferner Querverbindungsstrecken innerhalb der in sich geschlossenen Hauptförderstrecke (16) aufweist, so dass sich Schalen (32) gegenseitig überholen können und dass sich Transportwege von den Vereinzelungsstationen (20) zu den Zielstellen (22) verkürzen.

6. System nach einem der Ansprüche 1 bis 5, das ferner mindestens eine der folgenden Komponenten aufweist: einen Puffer für leere Schalen (32); einen Kommissionierpuffer für vorab beladene Schalen (32); eine Anbindung an manuelle oder automatisierte Kommissionierbereiche; Entnahme/Abgabebereiche; und/oder eine Anbindung an eine Hängefördertaschen-Be/Entladestation.

7. System nach einem der Ansprüche 1 bis 6, wobei der Sorter (14) durch einen Gliederkettenförderer implementiert ist.

8. System (10) nach einem der Ansprüche 1 bis 7, wobei das Lager (12) mindestens ein Lagermodul (50) aufweist, das durch zwei Regale (48) mit einer Regalgasse (52) dazwischen gebildet wird, wobei jedem der Regalmodule (50) mindestens eine separate Vereinzelungsstation (20) zugeordnet ist.

9. System (10) nach Anspruch 8, wobei die Lagerbehälter (54) über mindestens zwei separate Fördertechniken (26) der zugeordneten Vereinzelungsstation (20), insbesondere unidirektional, zugeführt werden, die einen Roboter (56) zum Umsetzen der Artikel (30) aufweist, wobei der Roboter (56) vorzugsweise so zwischen den separaten Fördertechniken (26) angeordnet ist, dass der Roboter (56) während eines Bewegungszyklus von jeder der separaten Fördertechniken jeweils einen Artikel (30) aufnehmen und zwischen den entsprechenden Artikelaufnahmen einen bereits aufgenommen Artikel (30) an eine der Schalen (32) abgeben kann.

10. System (10) nach Anspruch 9, wobei zwei weitere separate Fördertechniken (26) vorgesehen sind, die zum, insbesondere unidirektionalen, Rücktransportieren der Lagerbehälter (54) in das Lager (12) nach der Artikelentnahme durch den Roboter (56) eingerichtet sind.

11. System (10) nach Anspruch 10, wobei die zwei weiteren separaten Fördertechniken (26) unterhalb der zwei separaten Fördertechniken (26) angeordnet sind und über jeweils eine Hubeinrichtung (76) mit den zwei separaten Fördertechniken (26) verbunden sind.

12. System (10) nach einem der Ansprüche 1 bis 11, wobei der Sorter (14), der stirnseitig vor dem Lager (12) angeordnet ist, nicht breiter als das Lager (12) ist und vorzugsweise maximal 10 bis 20 m tief ist.

## Claims

1. A storage and order-picking system (10), comprising:
a control device (28) configured for performing two-stage picking of articles (30), wherein the two-stage picking comprises a first article-orientated picking stage, and a second order-orientated picking stage;
a warehouse (12), wherein the articles (30) in the warehouse (12) are stored in storage containers (54) in an article-pure manner, and wherein the articles (30) are retrieved in an article-orientated manner from the warehouse (12) in the first picking stage;
a sorter (14) comprising:
a loop-shaped main line (16);
at least one branch line (18), wherein each of the branch lines (18) is coupled, preferably mesh-shaped, to the main line (16) and is operable discontinuously; and
a plurality of sorter trays (32), wherein each of the trays (32) is configured to be moved along the lines (16, 18) and to be fed into and out from the main line (16);
one or more separation stations (20), wherein each of the separation stations (20):
is coupled to the warehouse (12) for being supplied with storage containers (54); and
is configured for reloading the articles (30) from the storage containers (54) onto the trays (32) for transferring the articles (30) in the first picking stage in accordance with order lines and/or individually onto respectively one of the trays (32) located on the one of the branch lines (18);
and a plurality of automatically and/or manually operated target locations (22) for the second picking stage, wherein each of the target locations (22) is coupled:
to one of the branch lines (18); and/or
directly to the main line (16);
wherein the control device (28) is configured to cause, in the first picking stage, a retrieval of the storage containers (54) from the warehouse (12) in an article-orientated manner in accordance with batch-picking, **characterized in that** the main line (16) is operated continuously, and that each of the separation stations (20) is coupled to the main line (16) via one of the branch lines (18).

2. The system (10) of claim 1, further comprising a conveying system (26) for order containers (38) which supplies the target locations (22) with order containers (38).

3. The system (10) of claim 1 or 2, wherein each of the target locations (22) comprises a chute (66) and/or a collecting container (68).

4. The system (10) of any one of claims 1 to 3, wherein the trays (32) and/or the target locations (22) are configured to automatically unload, in particular tilt, articles (30), which are loaded onto the respective tray (32), in an order-orientated manner at the location of the corresponding target location (22).

5. The system (10) of any one of claims 1 to 4, wherein the sorter (14) further comprises transversal connecting lines within the closed main conveying line (16) so that trays (32) can overtake each other and transporting paths from the separation stations (20) to the target locations (22) are shortened.

6. The system of any of claims 1 to 5 which further comprises at least one of the following components: a buffer for empty trays (32); a picking buffer for pre-loaded trays (32); a link to manual or automatic picking areas; removal/delivery areas; and/or a link to a loading/unloading station for overhead-conveyor pockets.

7. The system of any of claims 1 to 6, wherein the sorter (14) is implemented by a chain-link conveyor.

8. The system (10) of any of claims 1 to 7, wherein the warehouse (12) comprises at least one storage module (50) formed by two racks (48) including a rack aisle (52) therebetween, wherein at least one separate separation station (20) is associated with each of the rack modules (50).

9. The system (10) of claim 8, wherein the storage containers (54) are fed via at least two separate conveying systems (26) to the associated separation station (20), in particular unidirectionally, which comprises a robot (56) for transferring the articles (30), wherein the robot (56) preferably is arranged between the separate conveying system (26) such that during one movement cycle the robot (56) can remove from each of the separate conveying systems respectively one article (30) and deliver one article (30), which has already been removed, to one of the trays (32) between the corresponding article removals.

10. The system (10) of claim 9, wherein two further separate conveying systems (26) are provided which are configured for transporting, in particular unidirectionally, the storage containers (54) back into the warehouse (12) after the removal of articles by the robot (56).

11. The system (10) of claim 10, wherein the two further separate conveying systems (26) are arranged beneath the two separate conveying systems (26) and are connected to the two separate conveying systems (26) via respectively one lifting device (76).

12. The system (10) of any of claims 1 to 11, wherein the sorter (14) being arranged at a front end in front of the warehouse (12) is not wider than the warehouse (12) and preferably is 10 to 20 m in depth at maximum.

## Revendications

1. Système de stockage et de préparation de commandes (10), présentant :
un dispositif de commande (28) configuré pour effectuer une préparation de commandes en deux étapes d'articles (30), dans lequel la préparation de commandes en deux étapes présente une première étape de préparation de commandes orientée articles et une seconde étape de préparation de commandes orientée commandes ;
un lieu de stockage (12), dans lequel les articles (30) sont stockés dans le lieu de stockage (12) dans des récipients de stockage (54) à article unique et dans lequel les articles (30) sont déstockés du lieu de stockage (12) dans la première étape de préparation de commandes orientée articles ;
une trieuse (14) présentant :
une ligne principale (16) en forme de boucle ;
au moins une ligne secondaire (18), dans lequel chacune des lignes secondaires (18) est accouplée, de préférence sous forme de maillage, à la ligne principale (16) et peut fonctionner de manière discontinue ; et
une pluralité de plateaux de trieuse (32), dans lequel chacun des plateaux (32) est conçu pour être déplacé le long des lignes (16, 18) et pour être introduit dans la ligne principale (16) et pour être évacué de celle-ci ;
une ou plusieurs stations de dispersion (20), dans lequel chacune des stations de dispersion (20) :
est accouplée au lieu de stockage (12) afin d'être alimentée en récipients de stockage (54) ; et
est conçue pour le transbordement des articles (30) depuis les récipients de stockage (54) sur les plateaux (32) afin d'aiguiller, lors de la première étape de préparation de commandes, les articles (30) ligne de commande par ligne de commande et/ou individuellement sur respectivement l'un des plateaux (32) se trouvant sur l'une des lignes secondaires (18) ;
et une pluralité d'emplacements cibles (22) fonctionnant de manière automatisée et/ou manuelle pour la seconde étape de préparation de commandes, dans lequel chacun des emplacements cibles (22) est accouplé :
à l'une des lignes secondaires (18) ; et/ou
directement à la ligne principale (16) ;
dans lequel le dispositif de commande (28) est configuré pour provoquer, dans la première étape de préparation de commandes, un déstockage des récipients de stockage (54) hors du lieu de stockage (12) d'une manière orientée articles selon une préparation de commandes par lots, **caractérisé en ce que** la ligne principale (16) fonctionne en continu **et en ce que** chacune des stations de dispersion (20) est accouplée à la ligne principale (16) par l'intermédiaire d'une des lignes secondaires (18).

2. Système (10) selon la revendication 1, présentant en outre un moyen technique de transport (26) pour des récipients pour commande (38) qui alimente les emplacements cibles (22) avec des récipients pour commande (38).

3. Système (10) selon la revendication 1 ou 2, dans lequel chacun des emplacements cibles (22) présente une goulotte (66) et/ou un récipient de collecte (68).

4. Système (10) selon l'une des revendications 1 à 3, dans lequel les plateaux (32) et/ou les emplacements cibles (22) sont conçus pour déstocker, en particulier pour faire basculer, de manière automatisée et orientée ordres, des articles (30) stockés sur le plateau (32) respectif, sur le lieu de l'emplacement cible (22) correspondant.

5. Système (10) selon l'une des revendications 1 à 4, dans lequel la trieuse (14) présente en outre des lignes de liaison transversales à l'intérieur de la ligne de transport principale (16) fermée sur elle-même, de sorte que les plateaux (32) peuvent se dépasser mutuellement et que les trajets d'acheminement depuis les stations de dispersion (20) jusqu'aux emplacements cibles (22) sont raccourcis.

6. Système selon l'une des revendications 1 à 5, présentant en outre au moins l'un des éléments suivants : un stockage temporaire pour des plateaux (32) vides ; un stockage temporaire de préparation de commandes pour des plateaux (32) chargés au préalable ; une liaison à des zones de préparation de commandes manuelles ou automatisées ; des zones de prélèvement/dépôt ; et/ou une liaison à une station de chargement/déchargement de sacs de transport suspendus.

7. Système selon l'une des revendications 1 à 6, dans lequel la trieuse (14) est mise en œuvre par un transporteur à chaîne articulée.

8. Système (10) selon l'une des revendications 1 à 7, dans lequel le lieu de stockage (12) présente au moins un module de stockage (50) formé par deux étagères (48) comportant une allée d'étagères (52) entre elles, dans lequel au moins une station de dispersion (20) séparée est associée à chacun des modules d'étagères (50).

9. Système (10) selon la revendication 8, dans lequel les récipients de stockage (54) sont amenés par l'intermédiaire d'au moins deux moyens techniques de transport (26) séparés de la station de dispersion (20) associée, en particulier de manière unidirectionnelle, laquelle station de dispersion présente un robot (56) permettant d'aiguiller les articles (30), dans lequel le robot (56) est de préférence disposé entre les moyens techniques de transport (26) séparés de sorte que le robot (56) peut, pendant un cycle de déplacement, recevoir respectivement un article (30) provenant de chacun des moyens techniques de transport séparés et déposer, entre les réceptions d'article correspondantes, un article (30) déjà reçu sur l'un des plateaux (32).

10. Système (10) selon la revendication 9, dans lequel deux autres moyens techniques de transport (26) séparés sont prévus, lesquels sont conçus pour le transport de retour, en particulier de manière unidirectionnelle, des récipients de stockage (54) dans le lieu de stockage (12) après le prélèvement d'articles par le robot (56).

11. Système (10) selon la revendication 10, dans lequel les deux autres moyens techniques de transport (26) séparés sont disposés en dessous des deux moyens techniques de transport (26) séparés et sont reliés aux deux moyens techniques de transport (26) séparés par l'intermédiaire de respectivement un dispositif de levage (76).

12. Système (10) selon l'une des revendications 1 à 11, dans lequel la trieuse (14) disposée frontalement devant le lieu de stockage (12) n'est pas plus large que le lieu de stockage (12) et possède de préférence une profondeur maximale allant de 10 à 20 m.
